# EUROPEAN PATENT SPECIFICATION

(11) **EP 1 796 956 B1**
(45) Date of publication and mention of the grant of the patent: **11.02.2009**
(21) Application number: 05765453.5
(22) Date of filing: 24.06.2005
(51) Int. Cl.: B62M 1/02, B62M 3/08, A43B 5/14

(54) **CYCLING DEVICE FOR CONTROLLING THE MUTUAL POSITION BETWEEN THE LEG AND THE FOOT**
RADFAHRVORRICHTUNG ZUR STEUERUNG DER GEGENSEITIGEN POSITION ZWISCHEN BEIN UND FUSS
ACCESSOIRE DE VELO PERMETTANT DE CONTROLER LA POSITION DU PIED PAR RAPPORT A LA JAMBE

(30) Priority: 17.09.2004 IT MI20041785
(43) Date of publication of application: 20.06.2007
(73) Proprietor: Specialities S.r.l., 24046 Osio Sotto (IT)
(72) Inventor: COZZO, Francesco, I-28100 Novara (IT); FASSIO, Umberto, I-12100 Cuneo (IT)
(74) Representative: Alagem Modiano, Lara S.
(86) International application number: PCT/IB2005/001803
(87) International publication number: WO 2006/030262

(56) References cited:
- WO-A-01/30640
- WO-A-93/21058
- CH-A5- 670 997
- DE-A1- 3 241 142
- FR-A- 896 837
- US-A1- 2003 114 275
- PATENT ABSTRACTS OF JAPAN vol. 2003, no. 12, 5 December 2003 (2003-12-05) & JP 2003 291881 A (KOBAYASHI HIDEKI), 15 October 2003 (2003-10-15)

## Description

### Technical field

The present invention relates to a cycling device, particularly for sport cycling, for controlling the mutual position of the leg and the foot. In the present description, the term "leg" is used to designate the portion of the lower limb that lies between the knee and the ankle.

US 2003/114275 A1 discloses a cycling device according to the precharacterizing portion of the appended claim 1.

### Background art

The cycling device according to the present invention is applied particularly but not exclusively in the field of sports cycling, where the expression "sports cycling" is used to designate professional or amateur cycling practiced for example on a track or road, by using specifically provided bicycles, such as racing bicycles or so-called mountain bikes. The cycling device according to the present invention is also applied in the field of "non-sports" cycling, i.e., of cycling practiced as a physical exercise or training, individually or in groups, by using stationary bicycles, cyclettes, or exercise bicycles or underwater exercise bicycles, i.e., exercise bicycles to be used in pools, for example at home, in gyms or swimming pools. Moreover, the cycling device according to the present invention is applied in the field of cycling activity linked to the ordinary use of so-called cruising bicycles as a means of locomotion.

Hereinafter, the expression "cycling vehicle" is used to designate any type of bicycle: track or road racing bicycle, mountain bike, cruising bicycle, stationary bicycle, exercise bicycle, underwater exercise bicycle.

The structure and operation of a cycling vehicle are well-known; however, it is convenient to provide first of all a few remarks, which allow to point out a problem which is inherent in the use of the cycling vehicle and has so far been ignored or neglected.

Every cycling vehicle comprises a set of pedals, essentially constituted by a pivot, with the opposite ends of which the cranks that support the pedals are rigidly associated. The muscular effort applied by the rider with his lower limbs to the pedals is transmitted by the pedal set either to a propulsion unit, with a step-up gear/chain/spur gear system, or to a flywheel unit of the cycling vehicle.

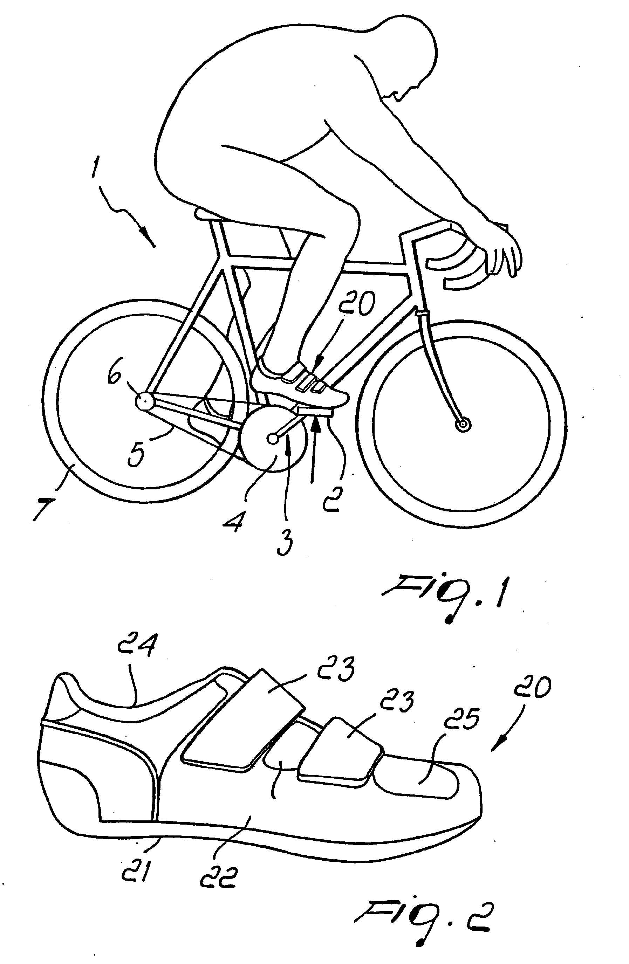

Merely by way of example, Figure 1 illustrates a cyclist who is riding a cycling vehicle 1, such as a racing bicycle; the cyclist, by imparting a reciprocating movement to his thighs, applies to the pedals 2 of the pedal set 3 a force which is transferred to the front spur gear or step-up gear 4 and from there, by means of the chain 5, to the rear spur gear 6 in order to generate the rotary motion of the rear wheel 7, which thus propels the cycling vehicle 1. The cyclist wears footwear 20, particularly sports footwear and even more particularly sports cycling footwear, termed "cycling shoes" in the field, of a known type.

Known types of footwear, particularly cycling shoes, typically have a shape that allows, during the actuation of the pedal set, a broad and free rotation of the foot about the articulation of the ankle and in particular allow an alternating mutual rotation between the foot and the leg about an axis that is substantially perpendicular to the plane on which the circular motion of the pedals occurs, the minimum and maximum breadth of the angle of said rotation being determined by physiological factors.

Figure 2 illustrates a typical model of footwear 20, such as a cycling shoe; it comprises a sole 21, with which an upper 22 is associated which has two flaps joined by closure elements 23 of the VELCRO^{®} type, and has, at the edge meant to surround the instep, a padded cutout 24 suitable to allow broad freedom of relative movement of the foot with respect to the leg. The sole 21 has a consistency that is sufficient to withstand the compression or traction stress applied by the foot to the pedal, while the upper 22 is of a soft, flexible and easily deformable type and is provided with weak breathable regions 25.

The reason of the shape and consistency of the cycling shoes of the background art is that these shoes, in addition to protecting the foot, seek to facilitate to the maximum possible extent the movement known in the cycling jargon as "round stroke", by means of which the cyclist, by modifying during the stroke, the angle formed by the foot and the leg on a plane that is substantially parallel to the plane on which the circular motion of the pedals occurs, orientates the direction of the force transmitted to the pedal.

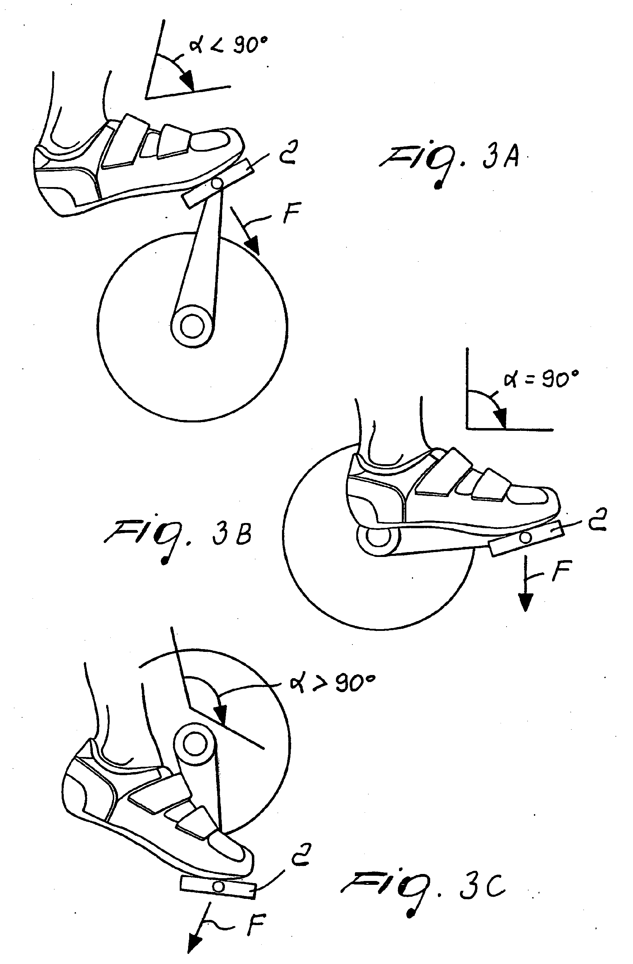

Figures 3A-3C illustrate, in three successive positions of the right crank of a pedal set of a cycling vehicle, the different relative position assumed by the leg and the foot of a cyclist in different steps that constitute the so-called "round stroke", based on so-called "ankle play", i.e., on the continuous correction, synchronized with the rotation of the cranks, of the angle α formed by the foot and by the leg. Figure 3A illustrates the relative position of the foot and the leg, characterized by an angle α of less than 90°, assumed when the pedal 2 is in a position that lies proximate to the top dead center, i.e., the point of the circular path traced by the pedal 2 at the maximum distance with respect to the ground. Figure 3B illustrates the relative position of the foot and the leg characterized by an angle α equal to 90°, assumed when the pedal 2 is substantially halfway along the stroke between the top dead center and the bottom dead center, i.e., the point of the circular path traced by the pedal 2 at the minimum distance with respect to the ground. Figure 3C illustrates the relative position of the foot and the leg characterized by an angle α greater than 90°, assumed when the pedal 2 is in a position that lies proximate to the bottom dead center. Figures 3A-3C also illustrate the orientation and direction of the force F that the cyclist applies to the pedal 2.

However, the practice of sports cycling has revealed that the "round stroke", in addition to being effective only over a short arc of a complete stroke, can be practiced, even by professional cyclists, only for very short periods of time, since this technique is very difficult and tiring to apply. For this reason, in practice the "round stroke", i.e., "ankle play", is used only occasionally even in professional or amateur sports cycling, the alleged advantages provided by this type of stroke being extremely limited in comparison with the expenditure of energy that it entails.

Analysis of the forces involved during cycling practice has in fact revealed that the freedom that the foot has, with respect to the leg, to rotate on a plane that is substantially parallel to the plane on which the circular motion of the pedal occurs during each individual stroke causes a continuous and substantial effort, made by the cyclist in order to keep the foot at right angles with respect to the leg and at the same time transmit to the pedal the propulsion force, which in itself is produced substantially by the muscles of the thigh.

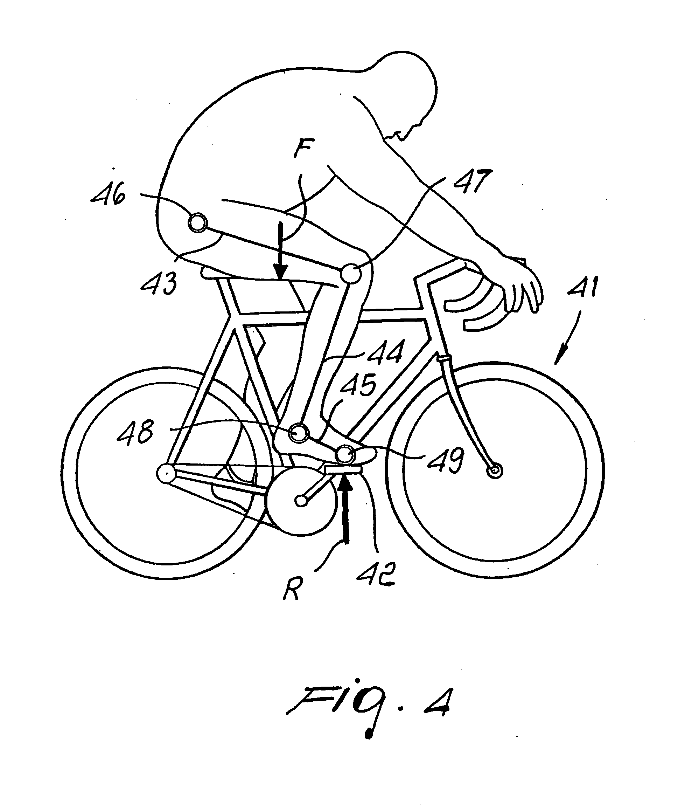

Figure 4 illustrates a cyclist who is riding a cycling vehicle 41 in the condition in which the right leg applies maximum effort to the pedal 42. In this figure, the lower limb of the cyclist is represented schematically with an equivalent system of rods: the thigh 43, the leg 44, and the foot 45, pivoted at the articulations of the hip 46, of the knee 47, of the ankle 48 and of the toes 49. In this configuration, the force F, applied by the muscles of the thigh 43, is transmitted, putting under stress the entire articulated system, to the hinge 49 at which the resistance R against motion provided by the pedal 42 is applied.

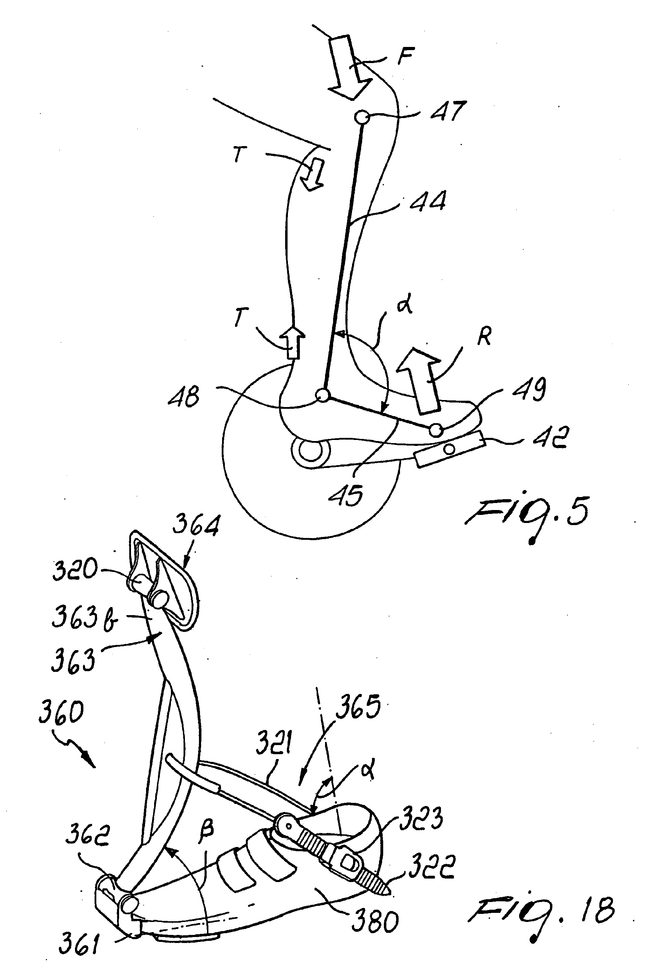

Figure 5 illustrates in detail the lower part of the right limb of the cyclist, which is composed of the leg 44 and the foot 45, which form an angle α between them. Analysis of this figure shows that the force F required to overcome the resistance R tends to reduce the angle α; this effect is contrasted by a force T, which is applied in practice by the muscles of the leg 44, particularly by the muscles of the calf, which control the angle of the foot 45 on the plane that is parallel to the plane on which the circular motion of the pedal 42 occurs, i.e., the plane of said figure. Accordingly, the cyclist must apply, with his lower limb, a series of forces, F and T, of which only the force F is actually useful to produce the propulsion force of the cycling vehicle, while the other force T is expended only to keep the angle of said limb, and in particular of the foot 45 with respect to the leg 44, rigid and controlled. In conclusion, the cyclist must perform a greater total muscle effort than he would have to in order to deliver only the force required to propel the cycling vehicle, since he must control continuously also the relative angle of the leg and the foot, with consequent disadvantageous energy expenditures and fatigue.

### Disclosure of the invention

The aim of the present invention is to provide a cycling device, particularly for professional or amateur sports cycling, that is capable of overcoming the problems described above that affect the background art.

In particular, the aim of the present invention is to provide a cycling device that allows to maximize the efficiency of the force applied by the cyclist to the cycling vehicle, especially to the pedals, eliminating completely or reducing substantially the factors that constitute a useless expenditure of energy, particularly in the pushing step of a stroke.

Within this aim, an object of the present invention is to provide a cycling device that allows to reduce drastically the energy expended by the muscles of the leg, particularly by the calf muscles, during an entire stroke, both during pushing from the top dead center to the bottom dead center and during pick-up from the bottom dead center to the top dead center.

Another object of the invention is to provide a cycling device that is versatile, so that it can be used easily in combination with footwear, particularly sports footwear and even more particularly so-called cycling shoes, or overshoes of a known type, and with pedals of known types of cycling vehicles.

Another object of the present invention is to provide a cycling device the use of which ensures the safety of the cyclist, particularly in emergency conditions in which said cyclist must disengage from the pedals or abandon the cycling vehicle.

Another object of the present invention is to provide a cycling device which, when combined with shoes, particularly sports shoes, allows cyclists to walk normally and safely.

Another object of the present invention is to provide a cycling device that is simple, easy and comfortable to use on the part of cyclists.

Within this technical aim, another object of the present invention is to achieve said aim and objects with a structure that is simple, relatively easy to provide in practice, safe in use, effective in operation, and relatively low in cost.

In accordance with the invention, there is provided a cycling device, particular for sports cycling, for controlling the relative position of the leg and the foot, as defined in the appended claims.

### Brief description of the drawings

Further characteristics and advantages of the present invention will become better apparent from the detailed description of some preferred but not exclusive embodiments of a cycling device, particularly for sports cycling, for controlling the relative position of the leg and the foot, illustrated by way of non-limiting example in the accompanying drawings, wherein:
Figure 1 is a schematic view of a cyclist who is riding a cycling vehicle;
Figure 2 is a schematic side view of an item of footwear such as a known type of cycling shoe;
Figures 3A, 3B and 3C illustrate schematically the relative position assumed by the leg with respect to the foot in three successive positions of a crank of a pedal set of a cycling vehicle, which correspond to three different steps of the so-called "round stroke";
Figure 4 is a schematic view of the articulated system that is equivalent to a lower limb of a cyclist;
Figure 5 is a schematic view of the relative position assumed by the leg and the foot during one step of a stroke;
Figure 6 is a schematic axonometric view of a first embodiment of cycling device according to the invention;
Figure 7 is a schematic front view of the device of Figure 6 in the active configuration;
Figure 8 is a schematic front view of the device of Figure 6 in the inactive configuration for when the cyclist is walking;
Figures 9 and 10 are rear and front axonometric views, in enlarged scale, of the supporting means of the device of Figure 6;
Figures 11 and 12 are two sectional views, taken respectively along the planes XI-XI and XII-XII, of a detail of the first embodiment of the device according to the invention;
Figure 13 is a sectional view of a detail of a second embodiment of the device according to the invention;
Figure 14 is an axonometric view of a third embodiment of the device according to the invention;
Figure 14A is an axonometric enlarged-scale view of a possible alternative embodiment of the supporting means of the device according to the invention;
Figures 15A, 15B and 15C illustrate the relative position assumed by the leg with respect to the foot of a cyclist who uses the cycling device of Figure 14 in three different steps of a stroke;
Figure 16 is a schematic axonometric view of the cycling device of Figure 14 applied to an item of footwear;
Figure 17 is a schematic axonometric view of the cycling device of Figure 14 meant to be applied to a pedal of a cycling vehicle;
Figure 18 is a schematic axonometric view of a fourth possible embodiment of the cycling device according to the invention;
Figure 19 is a front view of a right pedal of a cycling vehicle with the cycling device of Figure 6 applied thereto;
Figure 20 is a perspective view of the pedal of Figure 19;
Figure 21 is a schematic enlarged-scale sectional view of a detail of Figure 19;
Figure 22 is a schematic plan view of Figure 21.

### Ways of carrying out the invention

With particular reference to the cited figures, the reference numeral 60 generally designates a cycling device, particularly for sports cycling, for controlling the relative position of the leg and the foot.

In the present description, the term "footwear" is used to reference any item of footwear or shoe, particularly of the sports type, and even more particularly an item of footwear or shoe for cycling, known as "cycling shoe", or any element that is complementary to an item of footwear or shoe, such as for example an overshoe.

The expression "cycling vehicle" instead indicates any vehicle having a structure and an operation that are identical to, or similar to, those of a bicycle: a track or road racing bicycle, a cruiser bicycle, a mountain bike, a stationary bicycle, an exercise bicycle, an underwater exercise bicycle, and the like.

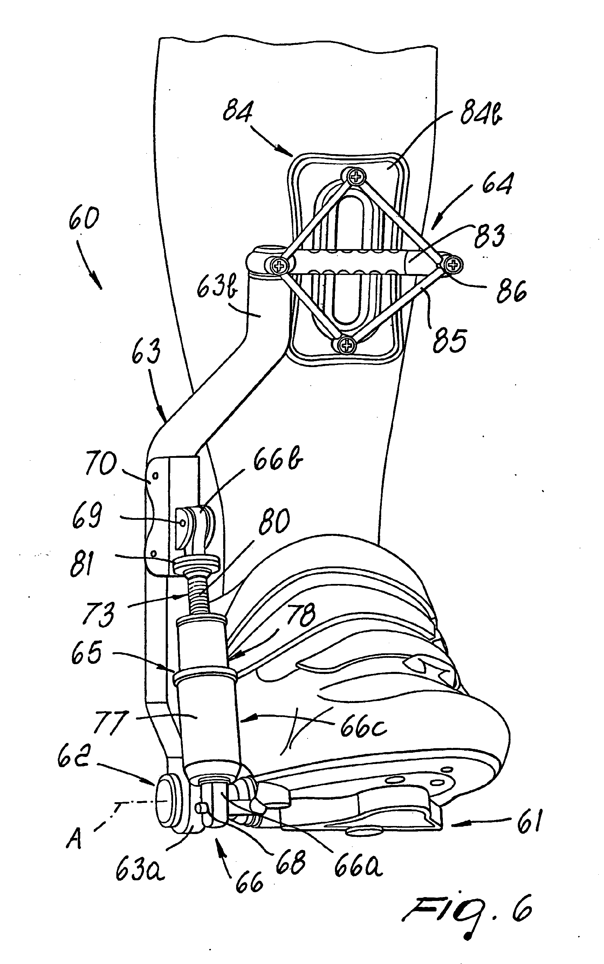

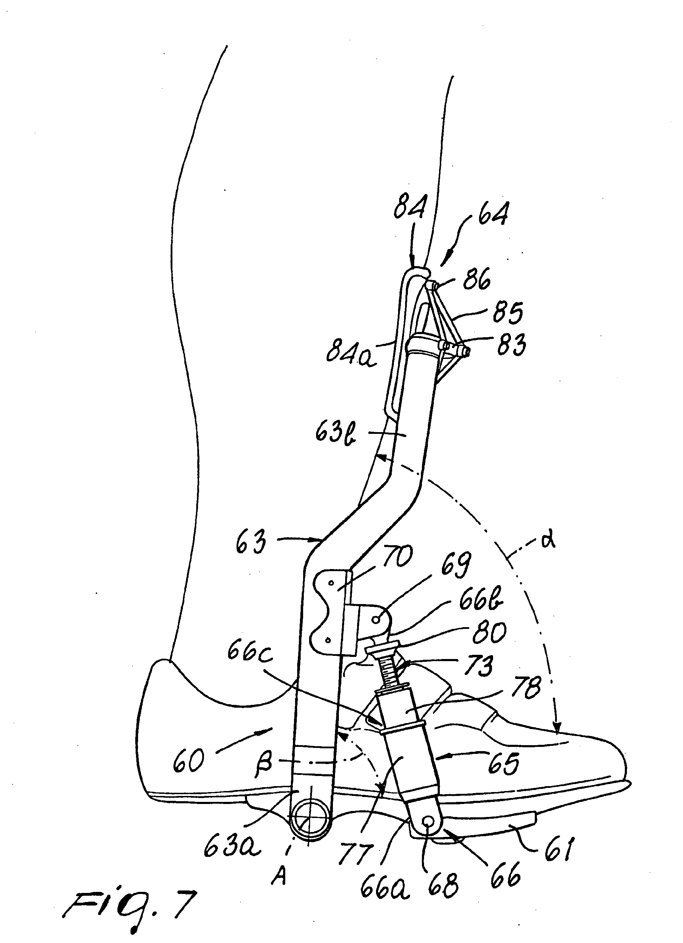

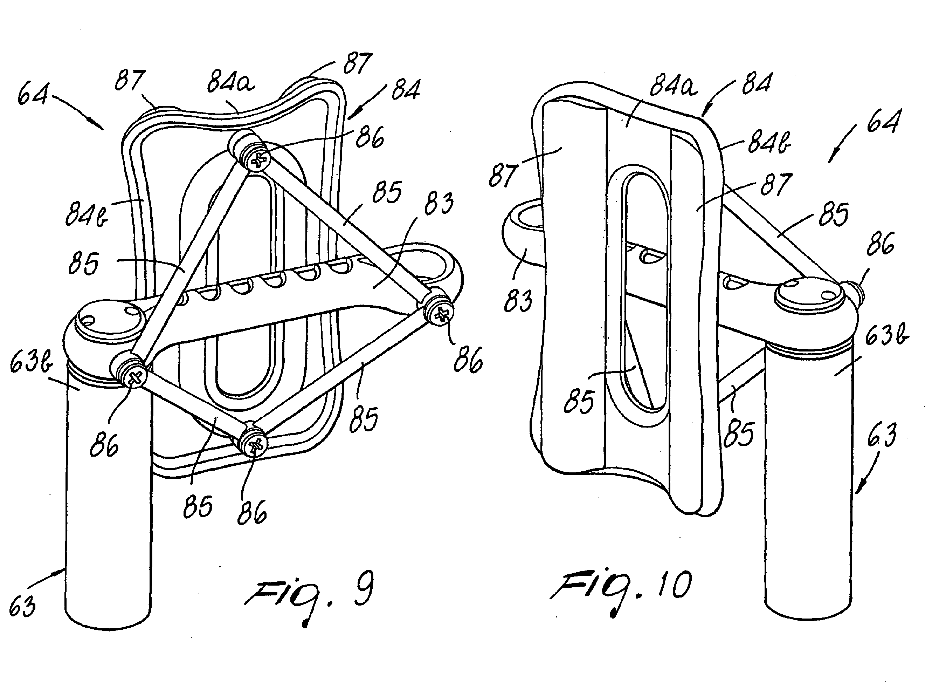

In the first embodiment shown in Figures 6-12, the device 60 comprises a base 61, which can be associated with an item of footwear or with a pedal for a cycling vehicle and with which a first end 63a of a rod-like element 63 is articulated so that it can rotate about a first axis A formed by first cylindrical hinge means 62. The second end 63b of the rod-like element 63 is provided with supporting means 64 for a front portion of the leg of a cyclist who is wearing items of footwear with each of which a device 60 is associated or who uses a cycling vehicle in which a respective device 60 is associated with the pedals.

In the figures cited above, the device 60 is shown applied to an item of footwear without this constituting a limitation to its application to the pedals of a cycling vehicle.

The device 60 further comprises means 65 for adjusting and locking the angular position β of the rod-like element 63 with respect to the base 61.

A cyclist who is wearing footwear with which a respective device 60 is associated or who is using a cycling vehicle with the pedals of which a respective device 60 is associated has each foot arranged substantially at the level of, or above, the base 61 of the respective device 60 and the corresponding leg in contact, at the front, with the supporting means 64 of the respective device 60. Since the angular position β of the rod-like element 63 of each device 60 is substantially fixed with respect the respective base 61, the angle α formed by each of the two legs of the cyclist with respect to the respective foot is also substantially fixed, at least during the pushing step of a pedaling stroke, i.e., during the arc of the circle traced by a pedal from the top dead center to the bottom dead center, i.e., between the points at the maximum and minimum distances with respect to the ground.

In use, the first axis A is arranged substantially at right angles to the plane on which the circular motion of the pedals occurs, and in a preferred but not exclusive embodiment it lies in a position that is substantially intermediate between the heel and the tip of an item of footwear or between the tarsal and metatarsal regions of the foot of the cyclist. However, alternative embodiments are also possible in which the first axis A lies for example proximate to the tip of an item of footwear or proximate to the toes of the foot.

The person skilled in the art will understand without any effort that the device 60 can be associated with an item of footwear or with a pedal, rigidly or optionally in an articulated manner, by using temporary coupling means or by using temporary or permanent fixing means, such as, merely by way of example, screws, rivets or the like, or by integrating it therein or by way of other technically equivalent means.

In any case, the base 61 preferably has a length that is at least equal to the region comprised between the heel and the metatarsal region of the foot of a cyclist, so as to allow the action of the foot on the heel and metatarsal regions.

In the first embodiment of the device 60, the adjustment and locking means 65 comprise a bar 66, which is provided with elements 67 for adjusting its length and with opposite ends 66a and 66b articulated, so that they can rotate about a respective axis that is substantially parallel to the first axis A and is formed respectively by second and third cylindrical hinge means 68 and 69, respectively to the base 61 and to the rod-like element 63.

By means of the adjustment elements 67, generally of the tensioning element type, it is possible to modify the length of the bar 66 and therefore the angular position β of the rod-like element 63 with respect to the base 61 and accordingly the angle α formed between the leg and the foot of the cyclist.

The end 66b of the bar 66 can be articulated directly to the rod-like element 63 or preferably indirectly by interposing a supporting element 70, which is associated to that it can slide axially along said rod-like element 63 in contrast with a presettable friction resistance.

In normal operating conditions, the supporting element 70 remains motionless; it slides along the rod-like element 63 only when the load applied thereto by the leg of the cyclist exceeds a maximum threshold, which corresponds substantially to the friction resistance between the supporting element 70 and the rod-like element 63, so as to prevent the discharge, onto the leg of the cyclist, of reaction overloads that can injure it.

In a preferred embodiment, the bar 66 is arranged in front of the rod-like element 63 with respect to the leg of the cyclist, and therefore acts as a strut; however, alternative embodiments are also possible in which, for example, the bar 66 is arranged to the rear of the rod-like element 63 and acts as a tension element.

The device 60 further comprises elastic means for activating the pushing step of the pedaling stroke, which are adapted to allow a predefinable variation range of the angular position β, and therefore of the angle α, and are formed by a portion 66c of the bar 66.

The portion 66c is constituted by at least one pair of linear elements, which are usually coupled to each other so that they can slide along a direction that is substantially parallel to the longitudinal axis of said bar and are adapted to allow a predefinable variation range of the angular position β of the rod-like element 63 and therefore of the angle α between the leg and the foot, elastic means for contrasting said variation range being provided.

In the first embodiment, the two linear elements are constituted by an internally hollow cylinder 71, which has a first open end inside which a piston 72, provided with a stem 73, is accommodated so that it can slide axially.

The piston 72 rigidly supports a pivot 74, which passes transversely through it; the opposite ends of the pivot 74 protrude from the piston 72 and are inserted, so that they can slide axially, in a corresponding longitudinal slot 75 formed in the walls of the cylinder 71.

The second end of the cylinder 71, which lies opposite the first end, is rigidly coupled to the end 66a of the bar 66 that is articulated to the base 61, and is therefore fixed. The end of the stem 73 that lies opposite the piston 72 is instead rigidly coupled to the end 66b of the bar 66 that is articulated to the rod-like element 63; the sliding of the piston 72 within the cylinder 71 thus allows the oscillation of the rod-like element 63 and therefore the variation range of the angle formed between the leg and the foot of the cyclist.

The elastic means for contrasting the sliding of the piston 72 with respect to the cylinder 71 are constituted by a helical spring 76, which acts by compression and the opposite ends whereof act respectively on the cylinder 71 and on the stem 73, i.e., in practice, between the opposite ends 66a and 66b of the bar 66.

The spring 76 is fitted coaxially on the cylinder 71 and on the stem 73 and is accommodated within two containment cups 77 and 78.

The two cups 77 and 78 are rigidly and coaxially fitted respectively to the cylinder 71 and to the stem 73 and are coupled to each other so that they can slide axially one inside the other.

The bottoms of the two cups 77 and 78 are mutually opposite and act as supporting surfaces for the opposite ends of the spring 76.

In particular, the cup 78 is constituted by a sleeve 78a and by a jacket 78b. The sleeve 78a is rigidly coupled to the stem 73 by the opposite ends of the pivot 74, which protrude from the respective slot 75 in order to engage in a corresponding hole formed in the walls of the sleeve 78a. The end of the sleeve 78a that lies opposite the cup 77 expands with a flange on which the jacket 78b rests.

Means for preloading the spring 76 are provided and, in a preferred embodiment, are constituted by a threaded coupling 79, which is formed between the bottom of the cup 77 and a portion of the cylinder 71. By screwing or unscrewing the cup 77 on the cylinder 71, the relative distance is changed between the bottoms of the two cups and therefore the reaction of the spring 76 is also changed.

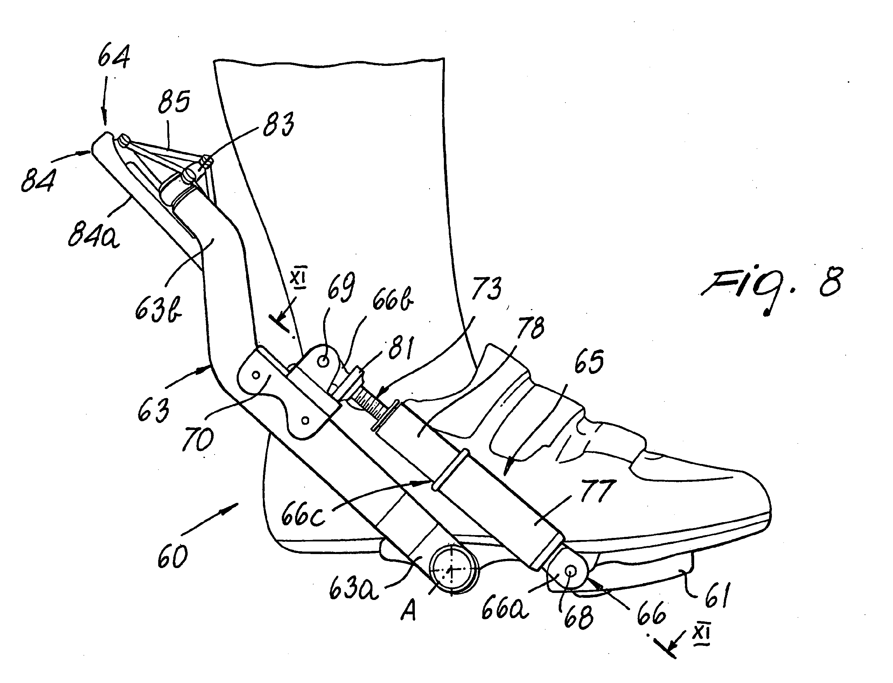

Regardless of the setting of the load of the spring 76, performed by virtue of the preloading means in order to set, in operating conditions, the resistance offered against the sliding of the piston 72 within the cylinder 71, the spring 76 has an initial load which ensures that the device 60 assumes an inactive configuration, shown in Figure 8, in which the rod-like element 63 protrudes to the rear of the leg of the cyclist in order to allow him to walk freely.

The initial load of the spring 76 is such as to prevent any oscillations of the rod-like element 63 caused by inertia-related forces.

Moreover, means for setting the stroke of the relative sliding of the piston 72 with respect to the cylinder 71 are provided which, in a preferred embodiment, are constituted by a threaded portion 80 of the stem 73, which protrudes from the bottom of the cup 78 and on which a setting nut 81 is engaged; the distance between the nut 81 and the bottom of the cup 78 determines the stroke.

The end of the stem 73 that lies opposite the piston 72 expands with a head, which forms the end 66b of the bar 66 that is articulated in the hinge 69.

The elements 67 for adjusting the length of the bar 66 are formed at the second end of the cylinder 71 and are constituted by a threaded axial hole, which is formed at said second end and with which the threaded end of a shank 82 engages, the opposite end of said shank expanding with a head which forms the end 66a of the bar 66, which is articulated within the cylindrical hinge 68.

The supporting means 64 comprise a substantially rod-like support 83, with which a sliding element is associated; in a preferred embodiment, said sliding element is constituted by a sliding block 84, which has a first face 84a that is adapted to make contact with the front portion of the leg and a second face 84b that lies opposite the first face and rests against the support 83.

The sliding block 84 is coupled so that it can move with respect to the support 83 by virtue of elastic bindings 85.

The elastic bindings 85 form a polygon in which one or more vertices are rigidly coupled to the second face 84b of the sliding block 84 and one or more vertices are rigidly coupled to the surface of the support 83 that lies opposite to the surface on which the sliding block 84 rests. In particular, the elastic bindings 85 form a quadrilateral, in which two opposite vertices are rigidly coupled to the second face 84b and the other two vertices are rigidly coupled to the support 83 by means of respective screws 86. The sliding block 84 can slide and tilt with respect to the support 83 while being kept in contact with the leg of the cyclist.

Advantageously, on the face 84a of the sliding block 84 there are two longitudinal pads 87, which are mutually spaced and are adapted to make contact with the opposite sides of the tibia of the leg.

In another preferred embodiment, referred in particular to the case in which the device 60 is associated with the pedals of a cycling vehicle, the supporting means 64 and particularly their support 83 are articulated, so that they can rotate about at least one axis, to the second end 63b of the rod-like element 63. In particular, the supporting means 64, i.e., their support 83, are articulated to the second end 63b of the rod-like element 63 so that they can rotate, about an axis that is substantially parallel to the plane on which the circular motion of the pedal occurs, between at least one disengagement position and one engagement position with respect to the front portion of the leg. Snap acting means, known to the person skilled in the art, are further provided for the automatic transition of the supporting means 64 or of their support 83 from the disengagement position to the engagement position, and can be activated for example from the outside by virtue of the action of the foot of the cyclist when he rests the foot on a pedal with which a device 60 is associated, and allow the automatic return of the supporting means 64, or of their support 83, to the disengagement position when the cyclist disengages his foot from said pedal.

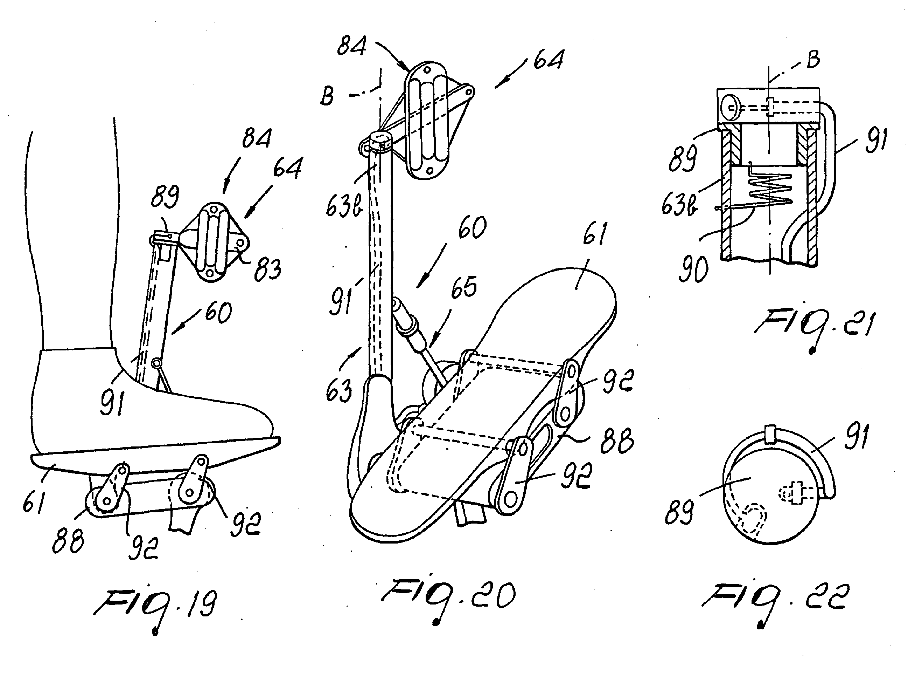

Figures 19 and 20 illustrate a device 60 applied to the inner side of the right pedal 88 of a cycling vehicle.

The support 83 is articulated, so that it can rotate about an axis B, to the end 63b of the rod-like element 63 between a disengagement position and an engagement position with respect to the front portion of the leg of a cyclist.

Transition from the disengagement position to the engagement position is performed by virtue of elastic-return snap means, shown in detail in Figures 21 and 22, which comprise: a bush 89, which is rigidly coupled to the end of the support 83 and is rotatably coupled, about the axis B, to the end 63b; a spring 90, for example a helical spring, in which one end is anchored to the end 63b and the opposite end is anchored to the bush 89; and an actuation cable 91, in which one end is rigidly coupled to the bush 89 and the opposite end is rigidly coupled the base 61.

The base 61 is articulated to the pedal 88 by means of a pair of linkages 92, the pedal 88, the two linkages 92 and the base 61 forming an articulated quadrilateral, which in inactive conditions has the base 61 arranged at a certain level with respect to the pedal 88.

When a cyclist rests his foot on the base 61, said base moves downwardly until it abuts against the pedal 88; the stroke that it performs tensions the actuation cable 91, which turns the bush 89 in the direction for moving the support 83 toward the front portion of the leg of the cyclist, moving the sliding block 84 so that it rests against said leg.

When the cyclist lifts the foot off the base 61, the spring 90 returns the support 83 to the position for disengagement from his leg.

The operation of the device 60 can be understood easily by the person skilled in the art.

By acting on the adjustment elements 67 it is possible to modify the length of the bar 66 and accordingly the angle formed between the rod-like element 63 and the base 61 and therefore the angle formed between the leg and the foot of the cyclist.

By acting on the nut 81 it is possible to adjust the sliding stroke of the piston 72 with respect to the cylinder 71 and therefore adjust the angular variation range of the rod-like element 63 with respect to the base 61 at least during the pushing step of a pedaling stroke.

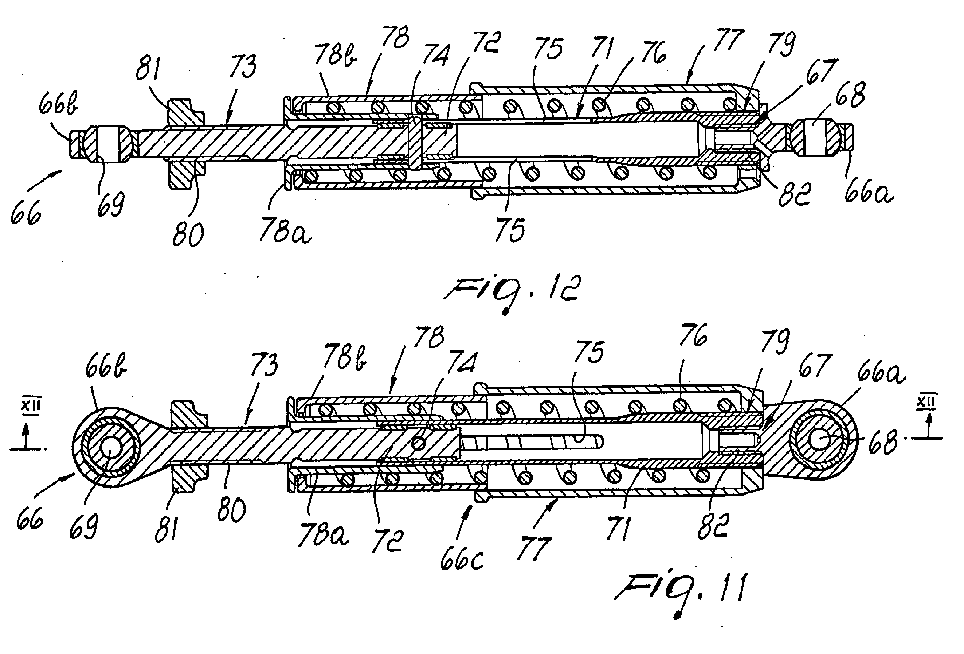

In Figures 11 and 12, the nut 81 is at the maximum distance with respect to the bottom of the cup 78, thus allowing the maximum possible stroke of the piston 72; by moving the nut 81 into contact with the bottom of the cup 78, the stroke of the piston 72 is nil and no variation range of the angle formed between the rod-like element 63 and the base 61, i.e., between the leg and the foot of the cyclist, is allowed.

By acting on the cup 77 it is further possible to adjust the load of the spring 76 and therefore the resistance provided against the sliding of the piston 72 in the cylinder 71.

The essential function of the device 60 is to keep the angle formed between the leg and the foot of a cyclist substantially fixed at least during the pushing step of a pedaling stroke, i.e., during the arc of the circular path traced by the pedal that lies between the top dead center and the bottom dead center thereof.

In use, the foot of the cyclist lies substantially at the same level as, or above, the base 61, while the front portion of his leg rests against the supporting means 64.

The bar 66, by acting as a strut, keeps substantially fixed the relative angular position of the leg and of the foot of the cyclist, particularly during the pushing step of a pedaling stroke. This prevents the pushing action applied by the cyclist from tending to reduce the angle formed between the leg and the foot, reducing or eliminating accordingly the effort that the muscles of the leg of the cyclist, particularly the muscles of the calf, would have to apply in order to keep the leg in a fixed configuration with respect to the foot. During the pushing step, therefore, the rotation of the foot with respect to the leg about an axis that lies at right angles to the plane on which the circular motion of the pedals occurs is substantially hindered.

However, during the pushing step it may be necessary to modify the angle between the leg and the foot, particularly reducing its breadth, at the top dead center or in particular effort conditions, such as for example during climbing. For this purpose, the elastic activation means, i.e., the portion 66c of the bar 66, allow a controlled variation range of the angular position of the rod-like element 63 with respect to the base 61 and therefore of the angle between the leg and the foot.

During pushing, the action that the leg of the cyclist applies to the rod-like element 63 tends to make the piston 72 slide within the cylinder 71 in contrast with the spring 76. The length of the bar 66 is therefore reduced temporarily and the angle formed between the leg and the foot tends to close. This variation range is limited by the sliding stroke determined by the position of the nut 81.

The portion 66c of the bar 66 therefore allows a controlled variation range of the angle formed between the leg and the foot.

The elastic energy accumulated by the spring 76 during pushing is then returned during the return or recovery step of the pedaling stroke, i.e., during the arc of the circular path traced by the pedal that lies between the bottom dead center and the top dead center, assisting the muscular action applied by the calf of the cyclist during the recovery steps.

The portion 66c of the bar 66 and the presence of the spring 76 further facilitate the step for coupling the cyclist to the device 60 and the disengagement step, particularly in emergency conditions. The cyclist in fact merely has to tilt the leg laterally to disengage from the rod-like element 63, which by virtue of the action of the spring 76 is brought to the inactive configuration.

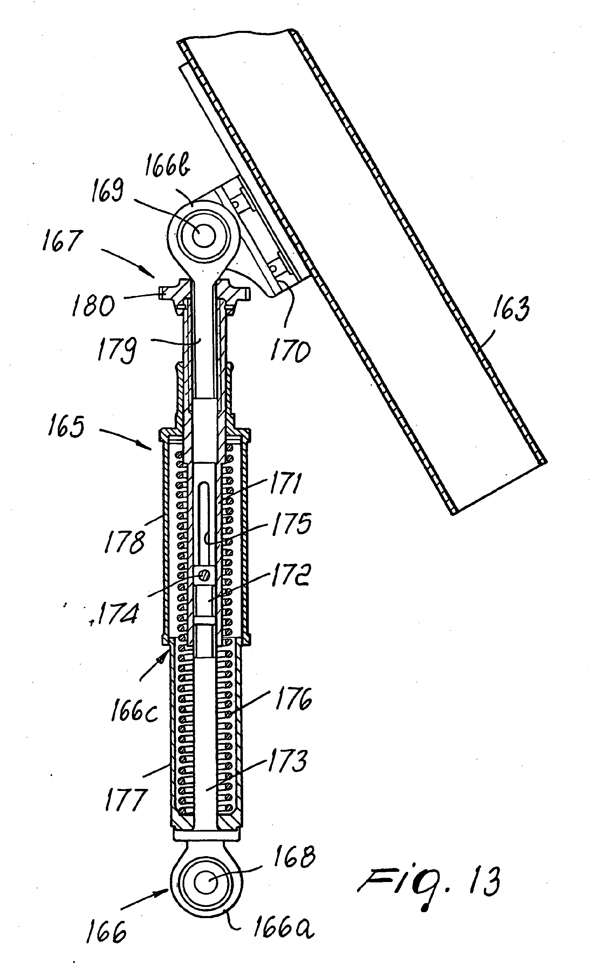

Figure 13 illustrates an alternative embodiment of the elastic means for activating the pushing step of the pedaling stroke, which are adapted to allow a predefinable variation range of the angular position of the rod-like element 163 and therefore of the angle formed between the leg and the foot.

In this embodiment, the adjustment and locking means 165 for the angular position of the rod-like element 163 are constituted by a bar 166, which is provided with elements 167 for adjusting its length.

The opposite ends 166a and 166b of the bar 166 are articulated, so they can rotate by virtue of respective cylindrical hinges 168 and 169, to the base of said device, which is not shown, and indirectly, by virtue of the interposition of a supporting element 170, to the rod-like element 163. The supporting element 170 can slide axially along the rod-like element 163 in contrast with a predefinable friction resistance.

The elastic means for activating the pushing step are formed by a portion 166c of the bar 166, which is constituted by an internally hollow cylinder 171 and has a first end that is open and contains, so that it can slide axially, a piston 172 rigidly coupled to a stem 173.

The piston 172 is rigidly coupled to a pivot 174, which passes through it transversely and in which the opposite ends are inserted so that they can slide in a corresponding longitudinal slot 175 formed in the walls of the cylinder 171.

Elastic means, constituted by a helical spring 176 which acts by compression, for contrasting the relative sliding of the piston 172 and the cylinder 171 act between said piston 172 and said cylinder 171.

The opposite ends of the spring 176 rest on the mutually opposite bottoms of two containment cups 177 and 178, which are mounted coaxially and rigidly with respect to the stem 173 and to the cylinder 171 and are mutually coupled so that they can slide axially.

Known means for preloading the spring 176, not shown in detail, are further provided.

The elements 167 for adjusting the length of the bar 166 are formed at the second end of the cylinder 171, which lies opposite the first end; said elements are constituted by a hole, which is formed at said second end and inside which one end of a threaded rod 179 is inserted so that it can slide. A ring 180 for actuating the rod 179 is associated rotatably with the second end of the cylinder 171.

The end of the rod 179 that protrudes from the ring 180 expands with a head, which forms the end 166b of the bar 166 that is articulated to the hinge 169, while the end of the stem 173 that lies opposite the piston 172 expands with a head which forms the end 166a of the bar 166 which is articulated to the hinge 168.

The cylinder 171 can slide with respect to the piston 172, allowing an angular variation range of the rod-like element 163.

In this embodiment, the stroke of the relative sliding between the cylinder 171 and the piston 172 is fixed.

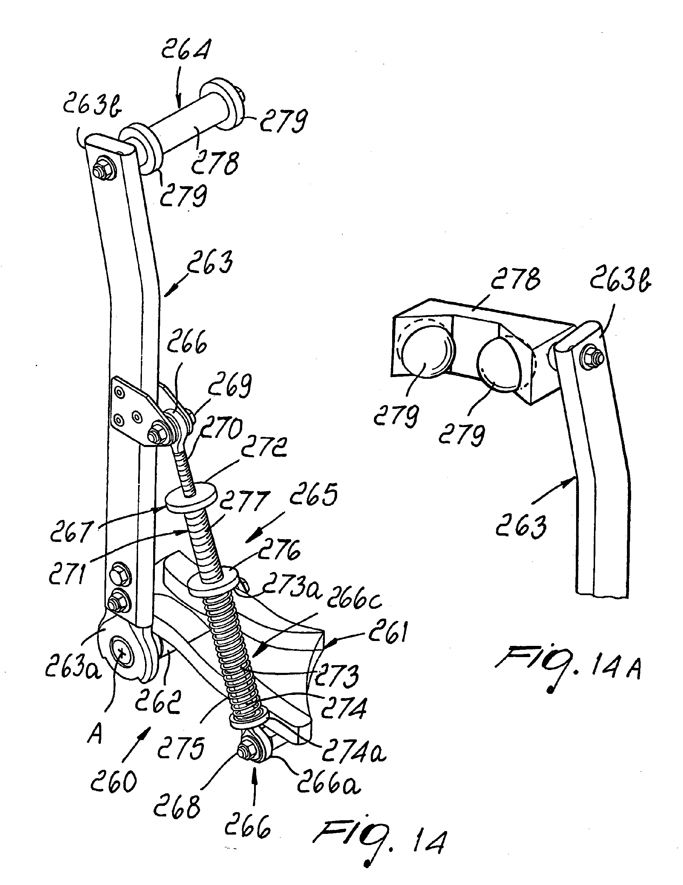

Figures 14-17 illustrate a third embodiment of a device 260 according to the invention.

The device 260 comprises at least one base 261, which can be associated with an item of footwear or with a pedal of a cycling vehicle and to which a first end 263a of a rod-like element 263 is articulated so that it can rotate about a first axis A formed by first cylindrical hinge means 262. The second end 263b of the rod-like element 263 is provided with means 264 for supporting a front portion of the leg of a cyclist who wears items of footwear with each of which a device 260 is associated or uses a cycling vehicle with the pedals whereof a respective device 260 is associated.

Conveniently, the base 261 has a length which covers at least the region comprised between the heel and the metatarsal region of the foot of a cyclist.

The device 260 further comprises means 265 for adjusting and locking the angular position β of the rod-like element 263 with respect to the base 261.

The locking and adjustment means 265 comprise a bar 266, which is provided with elements 267 for adjusting its length and has opposite ends 266a and 266b which are articulated, so that they can rotate about a respective axis that is substantially parallel to the first axis A and is formed respectively by second and third cylindrical hinge means 268 and 269, respectively to the base 261 and to the rod-like element 263.

The elements 267 for adjusting the length of the bar 266 are constituted by a known type of tensioning element, which comprises for example a threaded stem 270, which is inserted so that it can slide axially within a sleeve 271 and on which an axially fixed actuation wheel 272 acts. However, alternative embodiments of the adjustment elements 267 are also possible which for example might be constituted by a plurality of tubular elements which are mutually coupled in a telescopic fashion, rings for locking temporarily their relative sliding being provided, or by a hollow sleeve, which is threaded at its two ends with mutually opposite threads and in which two threaded stems engage.

By virtue of the adjustment elements 267, it is possible to change the length of the bar 266 and therefore the angular position β of the rod-like element 263 with respect to the base 261 and accordingly the angle α formed between the leg and the foot of the cyclist.

The device 260 further comprises elastic means for activating the pushing step of the pedaling stroke, which are adapted to allow a predefinable variation range of the angular position β and therefore of the angle α and which, in the preferred embodiment, are formed by a portion 266c of the bar 266.

The portion 266c is constituted by at least one pair of linear elements 273 and 274, which are mutually coupled so that they can slide along a direction that is substantially parallel to the longitudinal axis of said bar and are adapted to allow a predefinable variation range of the angular position β of the rod-like element 263 and therefore of the angle α between the leg and the foot, elastic means 275 for contrasting said variation range being provided.

The linear elements 273 and 274 are constituted by two tubular elements, which are mutually associated with a coupling of the telescopic type and and in which one tubular element 273 protrudes from the sleeve 271 on the opposite side with respect to the threaded stem 70 and the other tubular element 274 protrudes from the second cylindrical hinge means 268.

However, alternative embodiments of the linear elements 273 and 274 are also possible which can be constituted for example by two rods, which are mutually superimposed so that they are parallel and can be coupled so that they can slide with respect to each other by virtue of rectilinear guiding means.

In the preferred embodiment, the elastic means 275 are constituted by a helical spring, which acts by compression and is mounted coaxially on the linear elements 273 and 274, which act as a guide. The opposite ends of the spring rest against respective abutment surfaces 273a and 274a, which protrude respectively from the linear element 273 and from the linear element 274.

However, alternative embodiments of the elastic means 275 are also possible and might be constituted for example by a helical torsion spring which acts between the base 261 and the rod-like element 263.

Conveniently, means for preloading the elastic means 275 are provided which, in the preferred embodiment, are constituted by a ring 276, which is coupled to a thread 277 formed on the outer lateral surface of the sleeve 271 and acts on one of the two ends of the helical spring, the contact surface 273a of said end of the spring being formed by the face of the ring 276 that acts thereon.

Conveniently, the elastic means 275 have a constant or variable rigidity, their load curve being able to follow linear or non-linear laws, depending on the requirements.

As will become better apparent hereinafter, the portion 266c of the bar 266 acts substantially as a mechanism for activating the pedaling stroke, allowing the foot to perform a controlled angular range or oscillation with respect to the leg.

The supporting means 264 comprise a support 278 for at least one sliding element 279, which is suitable to make contact with the front portion of the leg of the cyclist.

The sliding elements 279 can be of the sliding or rolling type and can be constituted for example by sliding blocks or pads which are advantageously shaped or by rollers or wheels.

In a preferred embodiment, shown in Figure 14A, the support 278 is shaped like an arc-like band, which is adapted to surround the front portion of the leg of the cyclist, while the sliding elements 279 are constituted by one or more balls which are articulated, so that they can rotate about at least one axis and conveniently about their center, with respect to the internal surface of said band. Moreover, advantageously said balls are distributed at least along two lines which are substantially parallel to each other and are adapted, in the active configuration, to make contact with the opposite sides of the tibia of the leg.

In another preferred embodiment, not shown, the sliding elements 279, such as for example sliding blocks, are accommodated in respective sliding guides, which are formed in a cuff-like element, which can be associated detachably with the front portion of the leg of the cyclist.

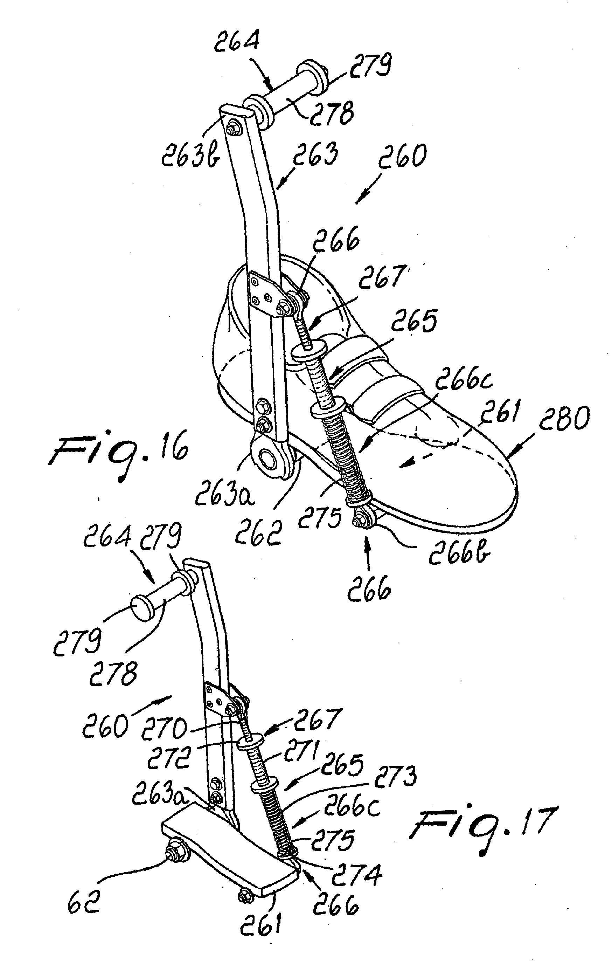

Figure 16 illustrates an item of footwear 280, such as a cycling shoe, with which the device 260 is associated. In particular, the base 261 is rigidly coupled, for example by virtue of fixing means which are not shown, to the sole of the shoe 280 so that the first axis A, i.e., the first hinge means 262, are arranged in a substantially intermediate position between the heel and the tip of said sole and the rod-like element 263 and the bar 266 are arranged at the outer side of the item of footwear 280. Moreover, the sole is provided with a coupling to the pedal of a cycling vehicle, particularly a racing bicycle.

Figure 17 instead illustrates a device 260 which can be applied to a right pedal of a cycling vehicle. In this case, substantially for safety reasons, the rod-like element 263 and the bar 266 lie proximate the side of the pedal that is directed toward the respective crank, so as to not hinder the lateral disengagement movement of the leg of the cyclist.

In a preferred embodiment, there are means for balancing the devices 260 which are adapted to prevent the free rotation of the respective pedals and in particular can be constituted by a flexible element, such as a cord, for connecting said devices 260, which is wound around a pulley associated, so that it can rotate freely, with the frame of the cycling vehicle.

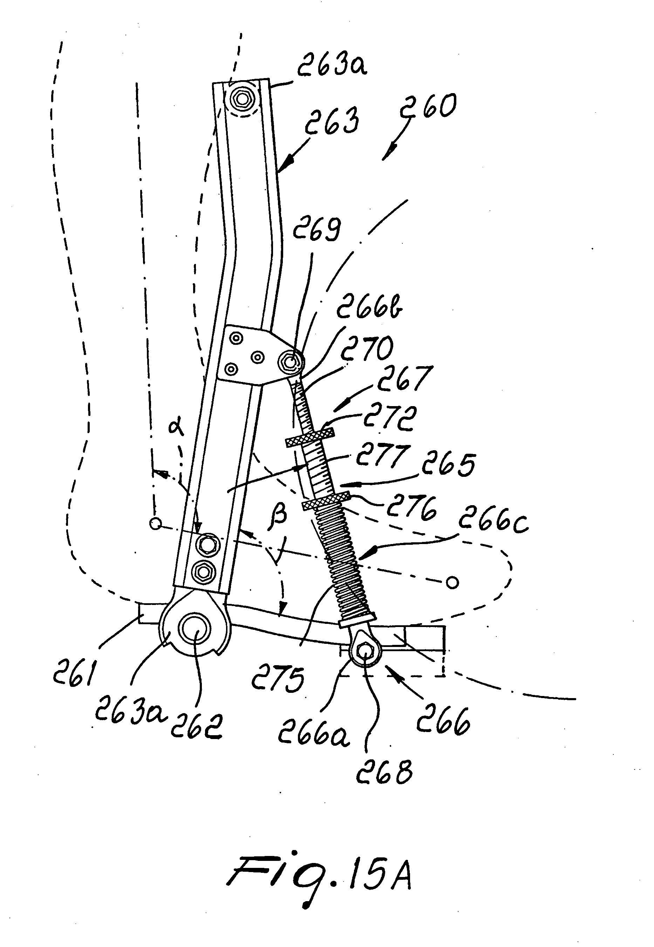

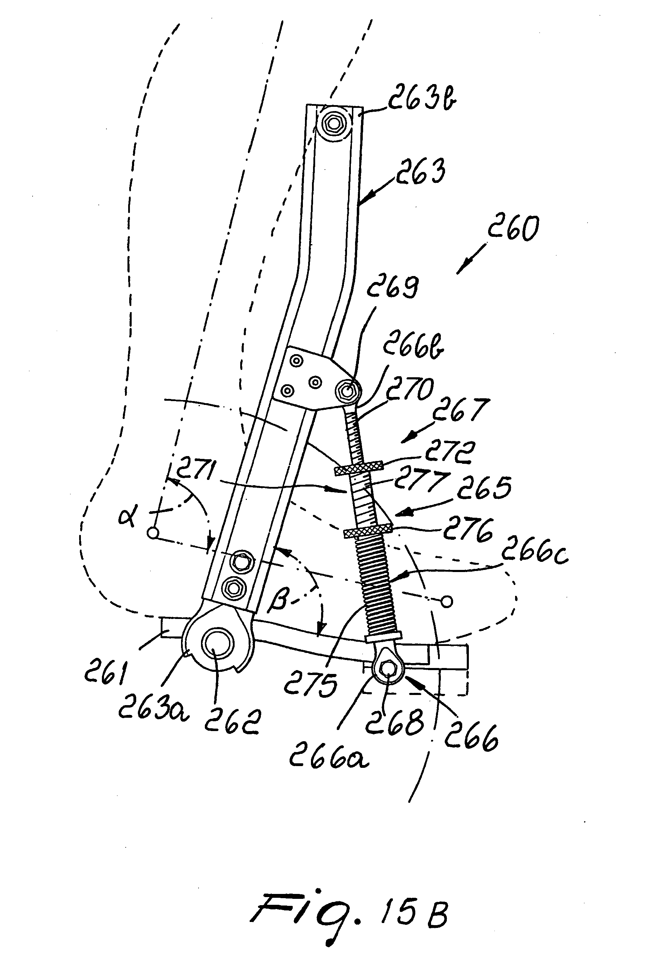

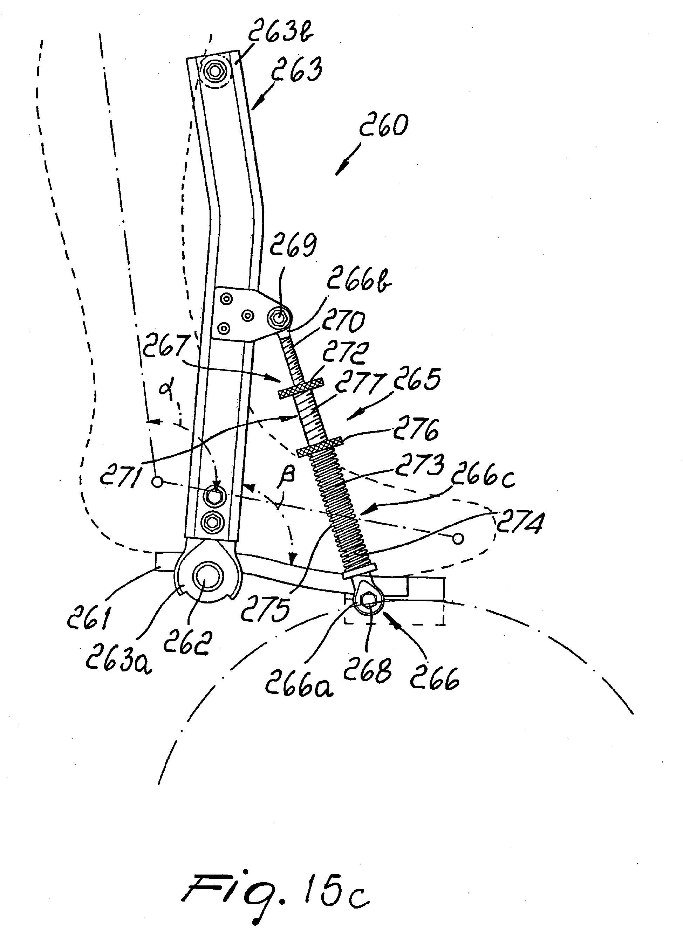

Figures 15A-15C illustrate the operation of the device 260 associated with a item of footwear or with a pedal of a cycling vehicle.

By acting on the adjustment elements 267, the cyclist adjusts the length of the bar 266, so as to adjust the angular position β of the rod-like element 263 with respect to the base 261 and therefore the angle α formed between his leg and his foot.

The bar 266, by acting as a strut, keeps the angular position β and therefore the angle α substantially fixed, preventing, particularly during the pushing step of a pedaling stroke, the pushing action applied by the cyclist from tending to reduce said angle α, reducing or eliminating accordingly the effort that the muscles of the cyclist's leg, particularly the calf muscles, would have to apply in order to keep the leg in a fixed arrangement with respect to the foot. During the pushing step, therefore, the rotation of the foot with respect to the leg about an axis that is perpendicular to the plane on which the circular motion of the pedals occurs is hindered or prevented.

However, at the top dead center or in particular effort conditions, such as for example during a climb, it may be necessary, during the pushing step, to change the angle α in particular by reducing its breadth. For this purpose, the elastic activation means, i.e., the portion 266c of the bar 266, allow a controlled variation range of the angular position β of the rod-like element 263 with respect to the base 261 and therefore of said angle α.

As shown in Figures 15A-15C, during pushing the action that the leg of the cyclist applies to the rod-like element 263 tends to make the linear elements 273 and 274 slide, in contrast with the action of the elastic means 275, from an extended or elongated configuration with respect to each other to a shorter or retracted configuration with respect to each other, thus reducing temporarily the length of the bar 266 and therefore the angular position β' and accordingly the angle α'. By acting on the ring 276 of the preloading means, it is possible to modify the resistance that the elastic means 275 provide against the pushing force applied by the leg of the cyclist, which tends to close the angle α. The variation range of the angle α is further limited by the sliding stroke of the two linear elements 273 and 274. The portion 266c of the bar 266 therefore allows a controlled variation rage of the angle α. The elastic energy accumulated by the elastic means 275 during pushing is then returned during the return or recovery step of the pedaling stroke, i.e., during the arc of the circular path traced by the pedal that lies between the bottom dead center and the top dead center, assisting the muscular action applied by the calf of the cyclist during the pick-up step.

The portion 266c of the bar 266 and the presence of the elastic means 275 further facilitate the coupling of the cyclist to the device 260 and his disengagement particularly in emergency conditions.

Figure 18 illustrates a fourth alternative embodiment of the device according to the invention. The device 360 is associated with an item of footwear 380 such as in particular a cycling shoe.

The base 361 of the device 360 is associated at the tip of the shoe 380, at which the first cylindrical hinge means 362 for the articulation of the first end 363a of the rod-like element 363 are located. The support means 364 are associated with the second end 363b of the rod-like element 363 and are constituted by a swivelling articulated pad with fourth cylindrical hinge means 320, which are parallel to the first means.

The adjustment and locking means 365 are constituted by a cable 321, which passes through a slot formed in an intermediate region of the rod-like element 363. On the side of the shoe 380 that is directed toward the cycling vehicle during operation, the cable 321 is preferably engaged detachably. On the opposite side, the cable 321 is connected by virtue of a ratchet system formed by means of a slotted belt 322 and by a buckle 323, the functionality whereof will be described hereinafter.

Proximate to the first hinge means 362, preferably inside them, there are spring elements, which are loaded so that the rod-like element 363 tends to rotate forward with respect to the leg of the cyclist.

The adjustment and locking means 365, once fastened, apply a force which contrasts the moment applied by the spring elements to the rod-like element 363, preventing the rod-like element 363 from rotating forward with respect to the leg of the cyclist.

By acting on the ratchet system and resting the leg against the support means 364, the cyclist can set the selected angle β between the element 363 and the base 361 and thus set the angle α formed between his leg and his foot.

While pushing on the pedal, the action of the cyclist would tend to rotate the ankle, closing the angle α. However, rotation about the ankle is blocked by the rod-like element 363.

The device 360 is thus rigidly coupled both to the foot and to the leg of the user, and once the angle α that is optimal or preferred by the cyclist has been determined, the foot and the leg remain coupled, preventing the rotation of the foot with respect to the leg on a plane that is substantially parallel to the plane on which the circular motion of the pedal lies, particularly during the pushing step, so that muscles of the leg are relieved of the effort of restoring the angular leg-foot configuration, which they would otherwise have to perform.

With reference to the action and reaction forces involved in the system formed by the leg and the device 360 during the pushing step, the direction of the force applied by the muscles of the cyclist, mainly by the thigh, can be broken down into the vertical component, which is directed downwardly along the longitudinal axis of the leg, and into a horizontal component, which is perpendicular thereto. Said horizontal component produces a flexural moment, which is pivoted, with sufficient approximation, proximate to the malleolus of the cyclist, and tends to close the angle α between the leg and the foot. In order to keep the foot substantially at right angles to the leg and therefore optimize the efficiency of the pushing action, the cyclist is normally forced to tension the muscles of the leg in order to balance the action of the flexural moment, removing an important fraction of energy from his resources.

The device 360 instead has a rod-like element 363 that provides the leg with the reaction needed to prevent its flexing, minimizing or eliminating the intervention of the muscles of the leg that are normally required to restore the angular leg-foot configuration. At the same time, the force applied vertically is transmitted to the sole of the item of footwear 380 proximate to the points of greatest contact between the sole of the foot and the insole of the shoe, i.e., proximate to the resting protrusions of the foot constituted by the heel and by the lower metatarsal region. Obviously, for optimum performance, it is convenient for the pedal to be located directly below said metatarsal region. The length of the rod-like element 363 may be variable.

Similar considerations apply during the pick-up or return step, i.e., if the force applied by the thigh is directed in the opposite direction with respect to the pushing step. In this case, in order to assist the locking of the angle α and improve the efficiency of the action of the cyclist, it is preferable to provide a contrast element also at the rear part of the leg, such as for example a ring or half-ring, which is connected to the rod-like element 363 and is closed around the calf of the cyclist, or simple elastic bands which wrap around the calf. In this last case, depending on the index of elasticity of the elastic bands, it is possible to range from a solution in which the rotation of the leg with respect to the foot is substantially locked also during the pick-up or return step to a solution that instead allows a certain freedom of movement in order to allow the cyclist to vary the position of the leg during this step.

In order to assist the step for starting the pedaling stroke at the top dead center, particularly when starting from a stationary position, there is instead an activation device, typically in the form of elastically deformable material, which is applied for example to the shoe 380. In particular, the activation device can be provided in the form of a sole having a variable thickness and controlled elasticity.

As an alternative, or complementarily, the activation device is applied between the shoe 380 and the pedal and is preferably metallic and curved so as to surround, between two mutually opposite ends, an optional shock absorber.

In a possible alternative embodiment, the adjustment and locking means 365 can be constituted by pawls of a known type, which are located within the first hinge means 362 and are such as to allow the step-by-step adjustment of the inclination of the rod-like element 363 by acting on said element 363 and providing release button or lever to allow the return of the rod-like element 363.

The person skilled in the art understands without any effort that the device 360 can be also associated directly to a pedal of a cycling vehicle by virtue of coupling means or by incorporating it therein.

In practice it has been found that the described invention achieves the proposed aim and objects.

In particular, it has been shown that the cycling device, in each of its embodiments, be it associated with a shoe or with a pedal, by virtue of the support provided for the forward portion of the leg of the cyclist, hinders or prevents substantially the rotation of the foot with respect to the leg about an axis that is substantially perpendicular to the plane on which the circular motion of the pedals occurs, keeping substantially unchanged the angle formed by the foot and by the leg of the cyclist at least during the pushing step of a pedaling stroke, thus removing the calf from the set of muscles involved actively in performing the pedaling stroke.

The cycling device according to the invention therefore allows to maximize the efficiency of the force applied by the cyclist to the pedals, eliminating completely or reducing substantially the factors that constitute an unnecessary expenditure of energy and fatigue, particularly during the pushing step of a pedaling stroke.

The cycling device according to the invention, by allowing a controlled and preset variation range of the angle formed between the leg and the foot, further allows to optimize the utilization of the muscular force both during pushing and during pick-up.

The device according to the invention can be used simply in combination with items of footwear, particularly sports shoes, and even more particularly cycling shoes or overshoes of a known type, and with pedals of known types of cycling vehicles.

Finally, the device according to the invention is simple, easy and safe to use on the part of a cyclist and, when applied to items of footwear, allows normal walking in safe conditions.

The invention thus conceived is susceptible of numerous modifications and variations, all of which are within the scope of the inventive concept as defined by the appended claims.

All the details may further be replaced with other technically equivalent ones.

In practice, the materials used, as well as the shapes and the dimensions, may be any according to requirements without thereby abandoning the scope of the protection of the appended claims.

It is therefore evident that the inventive concept on which the present invention is based is independent of the specific use of the described materials, which may be any, so long as they fall within the rigidity constraints that can be clearly understood by the person skilled in the art from the description itself.

Therefore, the scope of the protection of the claims must not be limited by the illustrations or by the preferred embodiments given in the description by way of example, but rather, the claims must comprise all the characteristics of patentable novelty that reside within the present invention, including all the characteristics that would be considered as equivalent by the person skilled in the art.

## Claims

1. A cycling device (60;260;360), particularly for sports cycling, for controlling the relative position of the leg and the foot, comprising:
- a base (61;261;361), which can be associated with an item of footwear (280;380) or a pedal (88) of a cycling vehicle; and
- a rod-like element (63;163;263;363), provided with a first end (63a;263a;363a), which is articulated so that it can rotate about a first axis (A), which is substantially perpendicular to the plane on which the circular motion of the pedal occurs, and with a second end (63b;262b;363b), which is provided with supporting means (64;264;364) for a front portion of a leg of a cyclist;
the cycling device being **characterized in that** it further comprises:
- means (65;165;265;365) for adjusting and locking the angular position (β) of said rod-like element (63;163;263;363) with respect to said base (61;261;361), said rod-like element (63;163;263;363) being suitable to keep the angle (α) formed between the leg and the foot of the cyclist who wears said item of footwear or rides said cycling vehicle substantially fixed at least during the pushing step of a pedaling stroke.

2. The device according to claim 1, **characterized in that** it comprises an item of footwear (280;380) provided with a sole with which said base (261,361) is rigidly associated, said first axis (A) being arranged in a substantially intermediate position between the tip and the heel.

3. The device according to one or more of the preceding claims, **characterized in that** said first axis (A) is formed by first cylindrical hinge means (62;262;362).

4. The device according to one or more of the preceding claims, **characterized in that** said adjustment and locking means (65;165;265) comprise a bar (66;166;266), which is provided with means (67;167;267) for adjusting its length and with opposite ends (66a,66b;166a,166b;266a;266b) which are articulated, so that they can rotate about a respective axis which is substantially parallel to said first axis (A), respectively to said base (61;261) and directly or indirectly to said rod-like element (63;163;263).

5. The device according to claim 4, **characterized in that** the end (66b;166b) of said bar (66;166) that is articulated to said rod-like element (63; 163) is articulated thereto indirectly by interposition of a supporting element (70;170), which is associated so that it can slide axially along said rod-like element (63;163) in contrast with a presettable friction resistance.

6. The device according to one or more of the preceding claims, **characterized in that** it comprises elastic means (66c;166c;266e) for activating the pushing step of the pedaling stroke, which are suitable to allow a predefinable variation range of said angular position (β).

7. The device according to claim 6, **characterized in that** said elastic activation means are formed within said bar (66;166;266) and comprise a portion (66c;166c;266c) of said bar (66;166;266) which is constituted by at least one pair of linear elements (71,72;171,172;273,274), which are mutually coupled so that they can slide along a direction that is substantially parallel to the longitudinal axis of the bar (66;166;266) and are suitable to allow a predefinable variation range of said angular position (β) of the rod-like element (63;163;263), elastic means (76;176;275) for contrasting said variation range being provided.

8. The device according to claim 7, **characterized in that** it comprises means (79) for preloading said elastic contrast means (76).

9. The device according to claim 7 or 8, **characterized in that** it comprises means (80,81) for setting the relative sliding stroke of the linear elements (71,72) of said pair.

10. The device according to one or more of claims 4 to 9, **characterized in that** said bar (66) is arranged, with respect to the leg of the cyclist, in front of said rod-like element (63).

11. The device according to one or more of claims 4 to 10, **characterized in that** said elements (67) for adjusting the length of the bar (66) are of the type of a tensioning element.

12. The device according to one or more of claims 4 to 11, **characterized in that** said elements (67) for adjusting the length of the bar (66) are formed at one end of at least one of the linear elements (71,72) of said pair.

13. The device according to one or more of claims 7 to 12, **characterized in that** said linear elements (71,72) are tubular and are mutually coupled with a telescopic coupling.

14. The device according to one or more of claims 7 to 13, **characterized in that** said elastic contrast means comprise at least one helical compression spring (76), which is guided on said linear elements (71,72) and the opposite ends of which act on a respective linear element (71,72).

15. The device according to one or more of claims 7 to 14, **characterized in that** said linear elements comprise a hollow cylinder (71), which has a first open end which accommodates, so that it can slide axially, a piston (72) provided with a stem (73), said piston (72) being provided with at least one pivot (74) which protrudes transversely and is inserted, so that it can slide axially, in at least one corresponding longitudinal slot (75) formed within the walls of said cylinder (71).

16. The device according to claim 15, **characterized in that** said elements (67) for adjusting the length of the bar (66) are formed at the second end of said cylinder (71), which lies opposite the first end.

17. The device according to claim 16, **characterized in that** said elements (67) for adjusting the length of the bar (66) comprise a threaded axial hole, which is formed at said second end of said cylinder (71) and with which the threaded end of a shank (82) engages, the opposite end of said shank (82) expanding with a head for the articulation of said bar (66) to said base (61) either directly or indirectly to said rod-like element (63).

18. The device according to claim 15, **characterized in that** said elements (167) for adjusting the length of the bar (166) comprise an axial hole, which is formed at said second end of said cylinder (171) and inside which an end of a threaded rod (179) is inserted so that it can slide, the opposite end of said rod (179) expanding with a head for the articulation of said bar (166) to said base either directly or indirectly to said rod-like element (163), a ring (180) for actuating said rod (179) being rotatably associated with said second end of the cylinder (171).

19. The device according to one or more of claims 7 to 18, **characterized in that** it comprises two cups (177,178) for containing said elastic contrast means (176), which are mounted coaxially with respect to said cylinder (171) and said stem (173) and are mutually coupled so that they can slide axially one inside the other, said cups (177,178) having respective bottoms which are mutually opposite and are respectively associated with said cylinder (171) and with said stem (173) and said elastic contrast means (176) acting between said bottoms.

20. The device according to claim 19, **characterized in that** at least one of said cups (177,178) is coupled, so that it can slide with a threaded coupling, to said cylinder (171) or said stem (173), said cup forming such preloading means.

21. The device according to one or more of claims 9 to 20, **characterized in that** said means for setting the relative sliding stroke of the linear elements of said pair comprise a threaded portion (80) of said stem (73), which protrudes from said first end of the cylinder (71) or from the bottom of the respective cup and on which an adjustment nut (81) is engaged, the distance between said nut (81) and said first end of the cylinder (71) or the bottom of the respective cup determining said stroke.

22. The device according to one or more of the preceding claims, **characterized in that** said support means (264) comprise a support (278) for at least one sliding element (279), which is suitable to make contact with said front portion of the leg of the cyclist.

23. The device according to claim 22, **characterized in that** said sliding elements (279) are accommodated in respective sliding guides (278), which are formed in a cuff-like element, which is detachably associable with said front portion of the leg of the cyclist.

24. The device according to claim 22 or 23, **characterized in that** said sliding elements (279) are of the rolling type.

25. The device according to claim 24, **characterized in that** said sliding elements (279) comprise balls, which are articulated to said support (278) and can rotate about at least one axis.

26. The device according to claim 22, **characterized in that** said support (278) is substantially rod-like and **in that** said sliding element (279) comprises a sliding block, which has a first face, which is suitable to make contact with said front portion of the leg, and a second face, which lies opposite the first face and rests against said support (278), elastic means for binding said sliding block to said support being provided.

27. The device according to claim 26, **characterized in that** said first face comprises two longitudinal bearings (279), which are arranged so that they are mutually spaced and are suitable to make contact with the opposite sides of the tibia of the leg.

28. The device according to claim 26 or 27, **characterized in that** said elastic bindings form a polygon which has one or more vertices which are rigidly coupled to said second face and one or more vertices which are rigidly coupled to the surface of said support (278) that lies opposite the contact region of said sliding block (279).

29. The device according to claim 28, **characterized in that** said polygon is a quadrilateral with two opposite vertices which are rigidly coupled to said second face and the other two vertices which are rigidly coupled to said support (278).

30. The device according to one or more of claims 1 and 22 to 29, **characterized in that** said supporting means (264) are articulated, so that they can rotate about at least one axis, to said second end (263b) of the rod-like element (263).

31. The device according to claim 30, **characterized in that** said support means (264) are articulated to said second end (263b) of the rod-like element (263) so that they can rotate about an axis which is substantially parallel to said plane on which the circular motion of the pedal occurs, between at least one disengagement position and an engagement position with respect to said front portion of the leg, snap-acting means being provided for the transition of said support means from said disengagement position to said engagement position.

32. An item of footwear for cycling, particularly sports cycling, **characterized in that** it comprises a cycling device according to one or more of claims 1 to 31.

33. The item of footwear according to claim 32, **characterized in that** it comprises a sole, below which said base is rigidly associated, said first axis being arranged in a substantial intermediate position between the heel and the tip of the sole.

34. A cycling vehicle, such as a bicycle or stationary bicycle, **characterized in that** each pedal is rigidly associated with a cycling device according to one or more of claims 1 to 31.

35. The cycling vehicle according to claim 34, **characterized in that** said device is arranged proximate to the side of the respective pedal that is adjacent to the respective crank.

36. The cycling vehicle according to claim 34 or 35, **characterized in that** it comprises means for balancing said devices, which are suitable to prevent the free rotation of the respective pedals.

37. The cycling vehicle according to claim 36, **characterized in that** said balancing means comprise a flexible element for connecting the devices which are associated with the two pedals, said element being wrapped around a pulley which is rotatably freely associated with the frame.

## Patentansprüche

1. Eine Radfahrvorrichtung (60; 260; 360), insbesondere für Radfahren als Sport, zur Steuerung der relativen Position des Beins und des Fußes, Folgendes umfassend:
- eine Basis (61; 261; 361), die mit einem Fußbekleidungs-Artikel (280; 380) oder mit einem Pedal (88) eines Radfahrgeräts verbunden werden kann, und
- ein stangenartiges Element (63; 163; 263; 363), das mit mit einem ersten Ende (63a; 263a; 363a) ausgestattet ist, das mit einer Gelenkverbindung versehen ist, so dass es sich um eine erste Achse (A) drehen kann, die im Wesentlichen senkrecht zu der Ebene ist, auf der die Kreisbewegung des Pedals stattfindet, und das mit einem zweiten Ende (63b; 263b; 363b) ausgestattet, welches mit Stützmitteln (64; 264; 364) für einen vorderen Abschnitt eines Beins eines Radfahrers ausgestattet ist;
wobei die Radfahrvorrichtung **dadurch gekennzeichnet ist, dass** sie weiter Folgendes umfasst:
- Mittel (65; 165; 265; 365) zur Einstellung und Verriegelung der winkelposition (β) des stangenartigen Elements (63; 163; 263; 363) in Bezug zur Basis (61; 261; 361), wobei das stangenartige Element (63; 163; 263; 363) geeignet ist, den Winkel (α), der zwischen dem Bein und dem Fuß des Radfahrers gebildet wird, der den Fußbekleidungs-Artikel trägt oder der das Radfahrgerät fährt, zumindest während des Schubschritts eines Pedalhubs im Wesentlichen unverändert zu halten.

2. Die Vorrichtung gemäß Anspruch 1, **dadurch gekennzeichnet, dass** sie den Fußbekleidungs-Artikel (280; 380) umfasst, der mit einer Sohle ausgestattet ist, mit der die Basis (261; 361) starr verbunden ist, wobei die erste Achse (A) in einer im Wesentlichen mittleren Position zwischen der Spitze und der Ferse angeordnet ist.

3. Die Vorrichtung gemäß einem oder mehreren der obigen Ansprüche, **dadurch gekennzeichnet, dass** die erste Achse (A) von ersten zylindrischen Scharnier-Mitteln (62; 262; 362) gebildet wird.

4. Die Vorrichtung gemäß einem oder mehreren der obigen Ansprüche, **dadurch gekennzeichnet, dass** die Einstellungs- und Verriegelungsmittel (65; 165; 265) eine Stange (66; 166; 266) umfassen, die ausgestattet ist mit Mitteln (67; 167; 267) zur Einstellung ihrer Länge und mit gegenüberliegenden Enden (66a, 66b; 166a, 166b; 266a; 266b), die gelenkig verbunden sind, so dass sie sich um eine entsprechende Achse drehen können, welche im Wesentlichen parallel zu der ersten Achse (A) beziehungsweise zu der Basis (61; 261) ist und direkt oder indirekt zu dem stangenartigen Element (63; 163; 263).

5. Die Vorrichtung gemäß Anspruch 4, **dadurch gekennzeichnet, dass** das Ende (66b; 166b) der Stange (66; 166), das gelenkig mit dem stangenartigen Element (63; 163) verbunden ist, damit indirekt durch Anordnung eines Stützelements (70; 170) dazwischen verbunden ist, das so verbunden ist, dass es axial entlang dem stangenartigen Element (63; 163) im Entgegenwirkung zu einem voreinstellbaren Reibungswiderstand gleiten kann.

6. Die Vorrichtung gemäß einem oder mehreren der obigen Ansprüche, **dadurch gekennzeichnet, dass** sie elastische Mittel (66c; 166c; 266c) zur Aktivierung des Schubschritts des Pedalhubs umfasst, die geeignet sind, einen vordefinierbaren Variationsbereich der Winkelposition (β) zu ermöglichen.

7. Die Vorrichtung gemäß Anspruch 6, **dadurch gekennzeichnet, dass** die elastischen Aktivierungsmittel innerhalb der Stange (66; 166; 266) geformt sind und einen Abschnitt (66c; 166c; 266c) der Stange (66;166;266) umfassen, der aus mindestens einem Paar von linearen Elementen (71, 72; 171, 172; 273, 274) besteht, die miteinander so gekoppelt sind, dass sie entlang einer Richtung gleiten können, die im Wesentlichen parallel zur Längsachse der Stange (66; 166; 266) ist, und die geeignet sind, einen vordefinierbaren Variationsbereich der Winkelposition (β) des stangenartigen Elements (63;163;263) zu ermöglichen, wobei elastische Mittel (76;176;275) zur Entgegenwirkung gegen den Variationsbereich bereitgestellt werden.

8. Die Vorrichtung gemäß Anspruch 7, **dadurch gekennzeichnet, dass** sie Mittel (79) zum Vorspannen der elastischen Entgegenwirkungsmittel (76) umfasst.

9. Die Vorrichtung gemäß Anspruch 7 oder 8, **dadurch gekennzeichnet, dass** sie Mittel (80, 81) zur Einstellung des relativen Gleithubs der linearen Elemente (71, 72) des Paares umfasst.

10. Die Vorrichtung gemäß einem oder mehreren der Ansprüche 4 bis 9, **dadurch gekennzeichnet, dass** die Stange (66) in Bezug zum Bein des Radfahrers vor dem stangenartigen Element (63) angeordnet ist.

11. Die Vorrichtung gemäß einem oder mehreren der Ansprüche 4 bis 10, **dadurch gekennzeichnet, dass** die Elemente (67) zur Einstellung der Länge der Stange (66) vom Typ eines Spannungselements sind.

12. Die Vorrichtung gemäß einem oder mehreren der Ansprüche 4 bis 11, **dadurch gekennzeichnet, dass** die Elemente (67) zur Einstellung der Länge der Stange (66) an einem Ende mindestens eines der linearen Elemente (71, 72) des Paares gebildet sind.

13. Die Vorrichtung gemäß einem oder mehreren der Ansprüche 7 bis 12, **dadurch gekennzeichnet, dass** die linearen Elemente (71, 72) rohrförmig sind und durch eine Teleskopverbindung miteinander gekoppelt sind.

14. Die Vorrichtung gemäß einem oder mehreren der Ansprüche 7 bis 13, **dadurch gekennzeichnet, dass** die elastischen Entgegenwirkungsmittel mindestens eine Schraubendruckfeder (76) umfassen, die auf den linearen Elementen (71, 72) geführt wird und deren gegenüberliegende Enden auf ein entsprechendes lineares Element (71, 72) wirken.

15. Die Vorrichtung gemäß einem oder mehreren der Ansprüche 7 bis 14, **dadurch gekennzeichnet, dass** die linearen Elemente einen hohlen Zylinder (71) umfassen, der ein erstes offenes Ende hat, welches einen mit einer Stange (73) versehenen Kolben (72) so aufnimmt, dass er axial gleiten kann, wobei der Kolben (72) mit mindestens einem Drehzapfen (74) ausgestattet ist, welcher transversal herausragt und in mindestens einen entsprechenden Längsschlitz (75) so eingeführt wird, der in den Wänden des Zylinders (71) gebildet ist, so dass er axial gleiten kann,

16. Die Vorrichtung gemäß Anspruch 15, **dadurch gekennzeichnet, dass** die Elemente (67) zur Einstellung der Länge der Stange (66) am zweiten Ende des Zylinders (71) gebildet sind, das gegenüber dem ersten Ende liegt.

17. Die Vorrichtung gemäß Anspruch 16, **dadurch gekennzeichnet, dass** die Elemente (67) zur Einstellung der Länge der Stange (66) ein axiales Gewindeloch umfassen, das an dem zweiten Ende des Zylinders (71) geformt ist und in welches das mit einem Gewinde versehene Ende eines Schafts (82) eingreift, wobei das gegenüberliegende Ende des Schafts (82) sich mit einem Kopf zur Gelenkverbindung der Stange (66) mit der Basis (61) vergrößert, und zwar entweder direkt oder indirekt mit dem stangenartigen Element (63).

18. Die Vorrichtung gemäß Anspruch 16, **dadurch gekennzeichnet, dass** die Elemente (167) zur Einstellung der Länge der Stange (166) ein axiales Loch umfassen, das an dem zweiten Ende des Zylinders (171) geformt ist und in das ein Ende einer Gewindestange (179) eingeführt wird, so dass es gleiten kann, wobei das gegenüberliegende Ende der Stange (179) sich mit einem Kopf zur Gelenkverbindung der Stange (166) mit der Basis vergrößert, und zwar entweder direkt oder indirekt mit dem stangenartigen Element (163), wobei ein Ring (180) zur Betätigung der Stange (179) drehbar mit dem zweiten Ende des Zylinders (171) verbunden ist.

19. Die Vorrichtung gemäß einem oder mehreren der Ansprüche 7 bis 18, **dadurch gekennzeichnet, dass** sie zwei Manschetten (177, 178) zur Aufnahme der elastischen Entgegenwirkungsmittel (176) umfasst, welche koaxial zu dem Zylinder (171) und dem Schaft (173) angeordnet und so miteinander gekoppelt sind, dass sie axial ineinander gleiten können, wobei die Manschetten (177, 178) entsprechende Böden haben, die einander gegenüberliegen und mit dem Zylinder (171) beziehungsweise mit der Stange (173) verbunden sind, und wobei die elastischen Entgegenwirkungsmittel (176) zwischen den Böden wirken.

20. Die Vorrichtung gemäß Anspruch 19, **dadurch gekennzeichnet, dass** mindestens eine der Manschetten (177, 178) so mit dem Zylinder (171) oder der Stange (173) gekoppelt wird, dass sie mit einer Gewindekopplung gleiten kann, wobei die Manschette solche vorspannungsmittel bildet.

21. Die Vorrichtung gemäß einem oder mehreren der Ansprüche 9 bis 20, **dadurch gekennzeichnet, dass** die Mittel zur Einstellung des relativen Gleithubs der linearen Elemente des Paars einen Gewindeabschnitt (80) der Stange (73) umfassen, der aus dem ersten Ende des Zylinders (71) oder aus dem Boden der entsprechenden Manschette herausragt und der in eine Einstellmutter (81) eingreift, wobei der Abstand zwischen der Mutter (81) und dem ersten Ende des Zylinders (71) oder dem Boden der entsprechenden Manschette den Hub bestimmt.

22. Die Vorrichtung gemäß einem oder mehreren der obigen Ansprüche, **dadurch gekennzeichnet, dass** die Stützmittel (264) eine Stütze (278) für mindestens ein Gleitelement (279) umfassen, das geeignet ist, im Kontakt mit dem vorderen Abschnitt des Beins des Radfahrers zu stehen.

23. Die Vorrichtung gemäß Anspruch 22, **dadurch gekennzeichnet, dass** die Gleitelemente (279) in entsprechende Gleitführungen (278) aufgenommen werden, die in einem manschettenartigen Element gebildet sind, das lösbar mit dem vorderen Abschnitt des Beins des Radfahrers verbunden werden kann.

24. Die Vorrichtung gemäß Anspruch 22 oder 23, **dadurch gekennzeichnet, dass** die Gleitelemente (279) vom rollenden Typ sind.

25. Die Vorrichtung gemäß Anspruch 24, **dadurch gekennzeichnet, dass** die Gleitelemente (279) Kugeln umfassen, welche gelenkig mit der Stütze (278) verbunden sind und sich um mindestens eine Achse drehen könnten.

26. Die Vorrichtung gemäß Anspruch 22, **dadurch gekennzeichnet, dass** die Stütze (278) im Wesentlichen stangenartig ist und dass das Gleitelement (279) einen Gleitschuh umfasst, der eine erste Fläche hat, welche geeignet ist, im Kontakt mit dem vorderen Abschnitt des Beins zu stehen, und eine zweite Fläche hat, die gegenüber der ersten Fläche liegt und gegen die Stütze (278) aufliegt, wobei elastische Mittel zum Binden des Gleitschuhs an die Stütze bereitgestellt sind.

27. Die Vorrichtung gemäß Anspruch 26, **dadurch gekennzeichnet, dass** die erste Fläche zwei lang gestreckte Lager (279) umfasst, die so angeordnet sind, dass sie voneinander beabstandet sind und geeignet sind, in Kontakt mit den gegenüberliegenden Seiten des Schienbeins zu stehen.

28. Die Vorrichtung gemäß Anspruch 26 oder 27, **dadurch gekennzeichnet, dass** die elastischen Bindungen ein Vieleck bilden, das einen oder mehrere Scheitelpunkte hat, welche starr mit der zweiten Fläche gekoppelt sind, und einen oder mehrere Scheitelpunkte, welche starr mit der Oberfläche der Stütze (278) gekoppelt sind, die gegenüber der Kontaktfläche des Gleitschuhs (279) liegt.

29. Die Vorrichtung gemäß Anspruch 28, **dadurch gekennzeichnet, dass** das Vieleck vierseitig ist, mit zwei gegenüberliegenden Scheitelpunkten, die starr mit der zweiten Fläche gekoppelt sind, und den beiden anderen Scheitelpunkten, die starr mit der Stütze (278) gekoppelt sind.

30. Die Vorrichtung gemäß einem oder mehreren der Ansprüche 1 und 22 bis 29, **dadurch gekennzeichnet, dass** die Stützmittel (264) so gelenkig mit dem zweiten Ende (263b) des stangenartigen Elements (263) verbunden sind, dass sie sich um mindestens eine Achse drehen können.

31. Die Vorrichtung gemäß Anspruch 30, **dadurch gekennzeichnet, dass** die Stützmittel (264) so mit dem zweiten Ende (263b) des stangenartigen Elements (263) verbunden sind, dass sie sich um eine Achse drehen können, welche im Wesentlichen parallel zu der Ebene ist, auf der die Kreisbewegung des Pedals stattfindet, und zwar zwischen mindestens einer Lösungsposition und einer Eingriffsposition in Bezug zum vorderen Abschnitt des Beins, wobei Schnappvorrichtungen für den Übergang der Stützmittel von der Lösungsposition in die Eingriffsposition bereitgestellt sind.

32. Ein Fußbekleidungs-Artikel zum Radfahren, insbesondere zum Radfahren als Sport, **dadurch gekennzeichnet, dass** es eine Radfahrvorrichtung gemäß einem oder mehreren der Ansprüche 1 bis 31 umfasst.

33. Der Fußbekleidungs-Artikel gemäß Anspruch 32, **dadurch gekennzeichnet, dass** er eine Sohle umfasst, unterhalb derer die Basis starr verbunden ist, wobei die erste Achse in einer im Wesentlichen mittleren Position zwischen der Ferse und der Spitze der Sohle angeordnet ist.

34. Ein Radfahrgerät, wie z. B. ein Fahrrad oder Fahrradtrainer, **dadurch gekennzeichnet, dass** jedes Pedal starr mit einer Radfahrvorrichtung gemäß einem oder mehreren der Ansprüche 1 bis 31 verbunden ist.

35. Das Radfahrgerät gemäß Anspruch 34, **dadurch gekennzeichnet, dass** die Vorrichtung nahe der Seite des entsprechenden Pedals angeordnet ist, welche an die entsprechende Kurbel angrenzt.

36. Das Radfahrgerät gemäß Anspruch 34 oder 35, **dadurch gekennzeichnet, dass** es Mittel zum Ausbalancieren der vorrichtungen umfasst, die geeignet sind, die freie Rotation der entsprechenden Pedale zu verhindern.

37. Das Radfahrgerät gemäß Anspruch 36, **dadurch gekennzeichnet, dass** die Ausbalancier-Mittel ein flexibles Element zur Verbindung der Vorrichtungen umfassen, die mit den beiden Pedalen verbunden sind, wobei das Element um eine Riemenscheibe gewunden wird, die drehbar frei mit dem Rahmen verbunden ist.

## Revendications

1. Dispositif conçu pour le cyclisme (60 ; 260 ; 360), en particulier pour le cyclisme sportif, prévu pour contrôler la position de la jambe par rapport à celle du pied, comprenant :
- une base (61 ; 261 ; 361) pouvant être associée à une chaussure (280 ; 380) ou à la pédale (88) du cycle ; et
- un élément en forme de tige (63 ; 163 ; 263 ; 363), doté d'une première extrémité (63a ; 263a ; 363a), qui est articulée de façon à pouvoir tourner autour d'un premier axe (A), qui est pratiquement perpendiculaire au plan sur lequel se produit le mouvement circulaire de la pédale, et d'une seconde extrémité (63b ; 263b ; 363b), dotée de moyens de support (64 ; 264 ; 364) pour la partie avant de la jambe du cycliste ;
dispositif conçu pour le cyclisme étant **caractérisé par le fait qu'**il comprend également :
- des moyens (65 ; 165 ; 265 ; 365) pour régler et verrouiller la position angulaire (β) dudit élément en forme de tige (63 ; 163 ; 263 ; 363) par rapport à ladite base (61 ; 261 ; 361), ledit élément en forme de tige (63 ; 163 ; 263 ; 363) étant adapté pour maintenir l'angle (α) formé entre la jambe et le pied du cycliste qui porte ladite chaussure ou qui utilise ledit cycle de façon substantiellement fixe, au moins pendant l'étape de poussée de la course de pédalage.

2. Dispositif selon la revendication 1, **caractérisé par le fait qu'**il comprend une chaussure (280 ; 380) dotée d'une semelle à laquelle ladite base (261 ; 361) est rigidement fixée, ledit axe (A) étant disposé dans une position intermédiaire entre la pointe et le talon.

3. Dispositif selon une ou plusieurs des revendications précédentes, **caractérisé par le fait que** ledit premier axe (A) est formé par des premiers moyens d'articulation cylindriques (62 ; 262 ; 362).

4. Dispositif selon une ou plusieurs des revendications précédentes, **caractérisé par le fait que** lesdits moyens de réglage et de verrouillage (65 ; 165 ; 265) comprennent une barre (66 ; 166 ; 266), qui est dotée de moyens (67 ; 167 ; 267) utilisés pour régler sa longueur et d'extrémités opposées (66a ; 66b ; 166a ; 166b ; 266a ; 266b) qui sont articulées, de façon à pouvoir tourner autour d'un axe respectif essentiellement parallèle au dit premier axe (A), par rapport à ladite base (61 ; 261) et directement ou indirectement par rapport au dit élément en forme de tige (63 ; 163 ; 263).

5. Dispositif selon la revendication 4, **caractérisé par le fait que** l'extrémité (66b ; 166b) de ladite barre (66 ; 166) qui est articulée par rapport au dit élément en forme de tige (63 ; 163) est articulée par rapport à celui-ci indirectement par l'interposition d'un élément de support (70 ; 170), qui y est associé de façon à pouvoir coulisser dans le sens axial le long dudit élément en forme de tige (63 ; 163) par contraste avec une résistance au frottement pré-réglable.

6. Dispositif selon une ou plusieurs des revendications précédentes, **caractérisé par le fait que** qu'il comprend des moyens élastiques (66c ; 166c ; 266c) pour activer l'étape de poussée du pédalage, adaptés pour permettre de prédéfinir une fourchette de variations de ladite position angulaire (β).

7. Dispositif selon la revendication 6, **caractérisé par le fait que** lesdits moyens d'activation élastiques sont formés à l'intérieur de ladite barre (66 ; 166 ; 266) et comprennent une partie (66c ; 166c ; 266c) de ladite barre (66 ; 166 ; 266) constituée d'au moins une paire d'éléments linéaires (71 ; 72 ; 971 ; 172 ; 273 ; 274), qui sont réciproquement accouplés pour pouvoir coulisser dans un sens essentiellement parallèle à l'axe longitudinal de la barre (66 ; 166 ; 266) et qui sont adaptés pour permettre de définir préalablement la fourchette de variation de ladite position angulaire (β) de l'élément en forme de tige (63 ; 163 ; 263), des moyens élastiques (76 ; 176 ; 275) pour contraster ladite fourchette de variations prévue.

8. Dispositif selon la revendication 7, **caractérisé par le fait qu'**il comprend des moyens (79) pour pré-charger lesdits moyens de contraste élastiques (76).

9. Dispositif selon la revendication 7 ou 8, **caractérisé par le fait qu'**il comprend des moyens (80 ; 81) de réglage de la course de coulissement réciproque des éléments linéaires (71 ; 72) de ladite paire.

10. Dispositif selon une ou plusieurs des revendications 4 à 9, **caractérisé par le fait que** ladite barre (66) est disposée, par rapport à la jambe du cycliste, devant ledit élément en forme de tige (63).

11. Dispositif selon une ou plusieurs des revendications 4 à 10, **caractérisé par le fait que** lesdits éléments (67) utilisés pour régler la longueur de la barre (66) sont de type éléments de tension.

12. dispositif selon une ou plusieurs des revendications 4 à 11, **caractérisé par le fait que** lesdits éléments (67) utilisés pour régler la longueur de la barre (66) sont formés à l'extrémité d'au moins un des éléments linéaires (71 ; 72) de ladite paire.

13. Dispositif selon une ou plusieurs des revendications 7 à 12, **caractérisé par le fait que** lesdits éléments linéaires (71 ; 72) sont tubulaires et sont réciproquement couplés avec un raccord télescopique.

14. Dispositif selon une ou plusieurs des revendications 7 à 13, **caractérisé par le fait que** lesdits moyens de contraste élastiques comprennent au moins un ressort de compression hélicoïdal (76), guidé sur lesdits éléments linéaires (71 ; 72) et dont les extrémités opposées agissent sur l'élément linéaire respectif (71 ; 72).

15. Dispositif selon une ou plusieurs des revendications 7 à 14, **caractérisé par le fait que** lesdits éléments linéaires comprennent un cylindre creux (71), comportant une première extrémité ouverte accueillant, de façon à ce qu'il puisse coulisser dans le sens axial, un piston (72) doté d'une tige (73), ledit piston (72) étant doté d'au moins un pivot (74) dépassant dans le sens transversal, et étant inséré, de façon à pouvoir coulisser dans le sens axial, dans au moins une fente longitudinale correspondante (75) formée dans les parois dudit cylindre (71).

16. Dispositif selon la revendication 15, **caractérisé par le fait que** lesdits éléments (67) utilisés pour régler la longueur de la barre (66) sont formés au niveau de la seconde extrémité dudit cylindre (71), se trouvant à l'opposé de la première extrémité.

17. Dispositif selon la revendication 16, **caractérisé par le fait que** lesdits éléments (67) utilisés pour régler la longueur de la barre (66) comportent dans le sens axial une ouverture filetée, formée au niveau de ladite seconde extrémité dudit cylindre (71), dans laquelle s'engage l'extrémité filetée d'une tige (82), l'extrémité opposée de ladite tige (82) s'élargissant pour former une tête pour l'articulation de ladite barre (66) par rapport à ladite base (61) directement ou indirectement par rapport au dit élément en forme de tige (63).

18. Dispositif selon la revendication 16, **caractérisé par le fait que** lesdits éléments (167) utilisés pour régler la longueur de la barre (166) comportent une ouverture axiale, formée au niveau de la seconde extrémité dudit cylindre (171) et à l'intérieur de laquelle une extrémité de la tige filetée (179) est insérée de façon à pouvoir coulisser, l'extrémité opposée de ladite tige (179) s'élargissant pour former une tête pour l'articulation de ladite barre (166) par rapport à ladite base, directement ou indirectement par rapport à l'élément en forme de tige (163), une bague (180) utilisée pour actionner ladite tige (179) étant associée de façon à pouvoir tourner à ladite seconde extrémité du cylindre (171).

19. Dispositif selon une ou plusieurs des revendications 7 à 18, **caractérisé par le fait qu'**il comprend deux coupelles (177 ; 178) pour contenir lesdits éléments de contraste élastiques (176), montées de façon coaxiale par rapport au dit cylindre (171) et à ladite tige (173), et qui sont réciproquement accouplées de façon à pouvoir coulisser l'une dans l'autre dans le sens axial, lesdites coupelles (177 ; 178) comportant deux fonds réciproquement opposés et respectivement associés avec ledit cylindre (171) et avec ladite tige (173), lesdits moyens de contraste élastiques (176) agissant entre lesdits fonds.

20. Dispositif selon la revendication 19, **caractérisé par le fait qu'**au moins une desdites coupelles (177 ; 178) est couplée, de façon à pouvoir coulisser avec un raccord fileté, au dit cylindre (171) ou à ladite tige (173), ladite coupelle formant un moyen de précharge.

21. Dispositif selon une ou plusieurs des revendications 9 à 20, **caractérisé par le fait que** lesdits moyens utilisés pour régler la course de coulissement relatif des éléments linéaires de ladite paire comprennent une partie filetée (80) de ladite tige (73), qui dépasse de ladite première extrémité du cylindre (71) ou du fond de la coupelle respective et sur laquelle un écrou de réglage (81) est engagé, la distance entre ledit écrou (81) et ladite première extrémité du cylindre (71) ou le fond de la coupelle respective déterminant ladite course.

22. Dispositif selon une ou plusieurs des revendications précédentes, **caractérisé par le fait que** lesdits moyens de support (264) comprennent un support (278) pour au moins un élément coulissant (279), adapté pour être en contact avec ladite partie avant de la jambe du cycliste.

23. Dispositif selon la revendication 22, **caractérisé par le fait que** lesdits éléments coulissants (279) sont disposés dans des guides coulissant respectifs (278), qui sont formés dans un élément en forme de bracelet, pouvant se fixer de façon amovible sur la partie avant de la jambe du cycliste.

24. Dispositif selon la revendication 22 ou 23, **caractérisé par le fait que** lesdits éléments coulissants (279) sont de type à roulements.

25. Dispositif selon la revendication 24, **caractérisé par le fait que** lesdits éléments coulissants (279) comprennent des billes, qui sont articulées par rapport au dit support (278) et qui peuvent tourner autour d'au moins un axe.

26. Dispositif selon la revendication 22, **caractérisé par le fait que** ledit support (278) est essentiellement en forme de tige et **par le fait que** ledit élément coulissant (279) comprend un coulisseau, comportant une première face, adaptée pour venir en contact avec ladite partie avant de la jambe, et une seconde face, opposée à la première face er reposant contre ledit support (278), des moyens élastiques pour relier ledit bloc coulissant au dit support étant fournis.

27. Dispositif selon la revendication 26, **caractérisé par le fait que** ladite première face comprend deux portées longitudinales (279) disposées de façon à être réciproquement espacées et adaptées pour être en contact avec les côtés opposés du tibia de la jambe.

28. Dispositif selon la revendication 26 ou 27, **caractérisé par le fait que** lesdits liens élastiques forment un polygone comportant un ou plusieurs sommets rigidement couplés à ladite seconde face et un ou plusieurs sommets rigidement couplés à la surface dudit support (278) se trouvant à l'opposé de la zone de contact dudit coulisseau (279).

29. Dispositif selon la revendication 28, **caractérisé par le fait que** ledit polygone est un quadrilatère avec deux sommets opposés rigidement couplés à ladite seconde face et les deux autres sommets qui sont rigidement couplés au dit support (278).

30. Dispositif selon une ou plusieurs des revendications 1 et de 22 à 29, **caractérisé par le fait que** lesdits moyens de support (264) sont articulés, de façon à pouvoir tourner autour d'au moins un axe, par rapport à ladite seconde extrémité (263b) de l'élément en forme de tige (263).

31. Dispositif selon la revendication 30, **caractérisé par le fait que** lesdits moyens de support (264) sont articulés par rapport à ladite seconde extrémité (263b) de l'élément en forme de tige (263), de façon à pouvoir tourner autour d'un axe qui est essentiellement parallèle au dit plan sur lequel le mouvement circulaire de la pédale se produit, entre au moins une position de désengagement et une position d'engagement par rapport à ladite partie avant de la jambe, des moyens de fixation rapide étant prévus pour la transition desdits moyens de support pour passer de la position désengagée à la position engagée.

32. Chaussure de cyclisme, en particulier pour le cyclisme sportif, **caractérisée par le fait qu'**elle comprend le dispositif conçu pour le cyclisme selon une ou plusieurs des revendications 1 à 31.

33. Chaussure selon la revendication 32, **caractérisée par le fait qu'**elle comprend une semelle, sous laquelle ladite base est rigidement fixée, ledit premier axe étant disposé dans une position substantiellement intermédiaire entre le talon et la pointe de la semelle.

34. Cycle, de type bicyclette ou vélo d'appartement, **caractérisé par le fait que** chaque pédale est rigidement associée à un dispositif de cyclisme selon une ou plusieurs des revendications 1 à 31.

35. Cycle selon la revendication 34, **caractérisé par le fait que** ledit dispositif est disposé contre le côté de la pédale respective adjacente à la manivelle respective.

36. Cycle selon la revendication 34 ou 35, **caractérisé par le fait qu'**il comprend des moyens pour équilibrer lesdits dispositifs, adaptés pour empêcher la rotation libre des pédales respectives.

37. Cycle selon la revendication 36, **caractérisé par le fait que** lesdits moyens d'équilibrage comprennent un élément flexible pour raccorder les dispositifs qui sont associés avec les deux pédales, ledit élément entourant une poulie associée au cadre de façon à pouvoir tourner librement.
